# EUROPEAN PATENT SPECIFICATION

(11) **EP 3 275 950 B1**
(45) Date of publication and mention of the grant of the patent: **24.04.2019**
(21) Application number: 16768938.9
(22) Date of filing: 25.03.2016
(51) Int. Cl.: C09D 11/38, B41J 2/01, B41M 5/00

(54) **ACTINIC RADIATION-CURABLE INKJET INK AND INKJET PRINTING METHOD**
AKTINISCHE STRAHLUNGSHÄRTBARE TINTENSTRAHLTINTE UND TINTENSTRAHLDRUCKVERFAHREN
ENCRE POUR IMPRIMANTE À JET D'ENCRE DURCISSABLE PAR UN RAYONNEMENT ACTINIQUE ET PROCÉDÉ D'IMPRESSION PAR JET D'ENCRE

(30) Priority: 26.03.2015 JP 2015065249
(43) Date of publication of application: 31.01.2018
(73) Proprietor: Konica Minolta, Inc., Tokyo 100-7015 (JP)
(72) Inventor: TOEDA, Takayuki, Tokyo 100-7015 (JP)
(74) Representative: Henkel, Breuer & Partner
(86) International application number: PCT/JP2016/059602
(87) International publication number: WO 2016/153035

(56) References cited:
- WO-A1-2014/050551
- JP-A- 2011 225 876
- JP-A- 2012 502 131
- JP-A- 2014 091 829
- JP-A- 2014 118 570
- JP-A- 2014 139 309

## Description

### Technical Field

The present invention relates to an actinic radiation-curable inkjet ink and an inkjet recording method.

### Background Art

An inkjet recording method, which is applicable to high-mix, low-volume production, is employed in various printing fields. As one type of inkjet recording method, there exists an actinic radiation cure-type inkjet recording method, which performs recording by impacting droplets of an inkjet ink on a recording medium, and then irradiating the inkjet ink with actinic radiation to cure. Such an actinic radiation cure-type inkjet recording method has recently drawn attention, since the method achieves high adhesion when an inkjet ink is applied on a recording medium that exhibits no absorption of the ink. Components contained in an actinic radiation-curable inkjet ink typically include a photocurable compound, a photoinitiator, and a colorant, for example.

Recording media obtained through such an actinic radiation cure-type inkjet recording method, however, have a problem in which an unreacted photocurable compound, an unreacted photoinitiator, photoinitiator residue after reaction, and/or the like are migrated from cured films of actinic radiation-curable inkjet inks.

Particularly, when the method is employed for package recording, such as food packaging, special consideration must be taken since there are by-laws and voluntary regulations that regulate, from a safety perspective, the amount of migration of an unreacted photocurable compound, an unreacted photoinitiator, photoinitiator residue after reaction, and/or the like.

For example, the Swiss Ordinance, one of such regulations, includes a list (positive list) of compositions that inks to be used in package recording are permitted to contain provided that recorded surfaces do not come into direct contact with food, and regulates the amount of migration of each composition. The strictest regulatory value of the amount of migration is less than 10 ppb.

As a technique to reduce the amount of migration, known is the use of an actinic radiation-curable inkjet ink containing a polyfunctional photocurable compound, an α-hydroxy ketone compound, and a high-molecular-weight photoinitiator (see Patent Literature (hereinafter, abbreviated as PTL) 1). Such technique, however, still does not reduce the amount of migration satisfactorily, and thus an enormous challenge of further reducing the amount of migration remains in order to satisfy the regulatory range for the amount of migration of the above-mentioned unreacted photocurable compound, unreacted photoinitiator, photoinitiator residue after reaction, and/or the like.

### Citation List

### Patent Literature

PTL 1
Japanese Patent Application Laid-Open No. 2013-227448

### Summary of Invention

### Technical Problem

The present invention is defined in claims 1-7 as attached. The present invention has been achieved in light of the above challenge, and an object of the present invention is to provide an actinic radiation-curable inkjet ink that can further reduce the amount of migration relative to PTL 1 and even satisfy a strict regulation, such as the Swiss Ordinance, as well as an inkjet recording method.

By substantially using a polyfunctional photocurable compound alone as a photocurable compound contained in an actinic radiation-curable inkjet ink, a crosslinking structure constructed by the polyfunctional photocurable compound effectively reduces the amount of migration, thereby almost eliminating the possibility that residual unreacted photocurable compound remains. Further, active studies by the present inventors have revealed that the incorporation of a gelling agent into an actinic radiation-curable inkjet ink has a remarkable effect on reduction of the amount of migration. While the details are not clear, it is believed that a card house structure (filter) is formed due to crystals produced by the gelling agent upon impact of an actinic radiation-curable inkjet ink on a recording medium, and then the card house structure functions as a filter that prevents the movement of an unreacted photocurable compound, an unreacted photoinitiator, photoinitiator residue after reaction, and/or the like that also contribute to migration in a cured film after irradiation with actinic radiation. Such a card house structure, as a filter different from the crosslinking structure constructed by the polyfunctional photocurable compound, effectively imparts a dual filter. This has been found to have a synergistic unexpected effect on suppression of migration.

Moreover, it has been found that a crystal structure produced by the gelling agent increases the viscosity of the actinic radiation-curable inkjet ink and thus suppresses oxygen inhibition on a surface of the actinic radiation-curable inkjet ink, thereby enhancing surface curability. It has also been found that a proportion of an unreacted photocurable compound, an unreacted photoinitiator, and/or the like on the ink surface is lowered, thereby reducing the amount of migration originated from the ink surface.

In addition, even having a high molecular weight, an α-hydroxy ketone compound, which is contained as a photoinitiator in an actinic radiation-curable inkjet ink, is readily soluble due to the excellent compatibility with the gelling agent, and thus enhances discharge stability, which is an important property for an inkjet ink. Further, it has been found that an α-hydroxy ketone compound with a specific molecular weight suppresses its movement through the crosslinking structure and the filter, and thus the amount of migration can be reduced.

### Solution to Problem

The above-mentioned objects according to the present invention are achieved by the following means.
[1] An actinic radiation-curable inkjet ink containing at least one photocurable compound and at least one photoinitiator, in which the at least one photocurable compound substantially consists of a polyfunctional photocurable compound; the at least one photoinitiator includes an α-hydroxy ketone compound; a molecular weight of the α-hydroxy ketone compound is 210 or more and 3,000 or less; and the actinic radiation-curable inkjet ink contains a gelling agent and undergoes sol-gel phase transition.
   It has been found that the above feature can reduce the amount of migration and even satisfy a strict regulation, such as the Swiss Ordinance.
[2] The actinic radiation-curable inkjet ink according to [1], in which the at least one photoinitiator includes at least one of an acylphosphine compound and an α-amino ketone compound.
   It has been found that the above feature can reduce the amount of migration and even satisfy a strict regulation, such as the Swiss Ordinance.
[3] The actinic radiation-curable inkjet ink according to [2], in which a mass ratio below is satisfied: X : (Y + Z) = 10 : 1 to 1 : 3 in which X is a content of the α-hydroxy ketone compound based on a total mass of the ink; Y is a content of the acylphosphine compound based on the total mass of the ink; and Z is a content of the α-amino ketone compound based on the total mass of the ink.
   It has been found that the above feature can reduce the amount of migration and even satisfy a strict regulation, such as the Swiss Ordinance.
[4] The actinic radiation-curable inkjet ink according to any one of [1] to [3], in which the at least one photoinitiator includes at least one of a benzophenone compound with a molecular weight of 300 or more and 3,000 or less, and a thioxanthone compound with a molecular weight of 300 or more and 3,000 or less.
   It has been found that the above feature can suppress migration and even satisfy a strict regulation, such as the Swiss Ordinance.
[5] The actinic radiation-curable inkjet ink according to [3], in which the acylphosphine compound is Irg 819 (bis(2,4,6-trimethylbenzoyl)phenylphosphine oxide), and the α-amino ketone compound is Irg 369 (2-benzyl-2-dimethylamino-1-(4-morpholinophenyl)butanone-1).
   It has been found that the above feature can reduce the amount of migration and even satisfy a strict regulation, such as the Swiss Ordinance.
[6] An inkjet recording method, in which recording is performed using the actinic radiation-curable inkjet ink according to any one of [1] to [5].
[7] The inkjet recording method according to [6], including irradiating the actinic radiation-curable inkjet ink with actinic radiation from a light source and curing, in which the light source is a LED with a peak emission wavelength of 200 nm or longer and less than 350 nm.

### Advantageous Effects of Invention

The present invention provides an actinic radiation-curable inkjet ink that can further reduce the amount of migration relative to PTL 1 and even satisfy a strict regulation, such as the Swiss Ordinance, as well as an inkjet recording method.

### Brief Description of Drawings

FIG. 1A is a side view illustrating an example of a configuration of the main part of line recording-type inkjet recording apparatus 10, which is one type of inkjet recording apparatus in which an actinic radiation-curable inkjet ink of the present invention is used;
FIG. 1B is a top view illustrating the example of the configuration of the main part of line recording-type inkjet recording apparatus 10, which is one type of inkjet recording apparatus in which an actinic radiation-curable inkjet ink of the present invention is used; and
FIG. 2 is a top view illustrating an example of a configuration of the main part of serial recording-type inkjet recording apparatus 20, which is an of inkjet recording apparatus in which an actinic radiation-curable inkjet ink of the present invention is used.

### Description of Embodiments

An actinic radiation-curable inkjet ink of the present invention (herein also referred to as "inkjet ink" or simply "ink") is an actinic radiation-curable inkjet ink containing at least one photocurable compound and at least one photoinitiator, in which the at least one photocurable compound substantially consists of a polyfunctional photocurable compound; the at least one photoinitiator includes an α-hydroxy ketone compound; a molecular weight of the α-hydroxy ketone compound is 210 or more and 3,000 or less; and the actinic radiation-curable inkjet ink contains a gelling agent and undergoes sol-gel phase transition.

In the following, the present invention, essential components thereof, and embodiments thereof will be described in detail. As used herein, the term "to" in a numerical range is used to include numerical values before and after the term as the lower limit and the upper limit. Further, "mass%" herein refers to a content of each component in mass%, relative to 100 mass% of the total mass of an ink, unless otherwise indicated.

### 1. Actinic Radiation-curable Inkjet Inks

An actinic radiation-curable inkjet ink of the present invention is an actinic radiation-curable ink composition. "Actinic radiation" is light rays that can provide energy to generate initiating species in an ink composition by irradiation therewith, and include α rays, γ rays, X-rays, UV rays, and electron beams, for example. Among them, in view of curing sensitivity and availability of apparatuses, UV rays and electron beams are preferred, and UV rays are more preferred.

In the following, various component compounds and the like of the actinic radiation-curable inkjet ink of the present invention will be described in detail.

### [Gelling Agent]

The actinic radiation-curable inkjet ink of the present invention contains a gelling agent according to claim 1. As used herein, a gelling agent is defined as "an organic substance that is solid at room temperature and becomes liquid upon heating, and functions to allow an ink to undergo temperature-dependent reversible sol-gel phase transition."

When a gelling agent crystallizes in an ink, formed is a space three-dimensionally surrounded by crystals, which are crystallized gelling agent. Such a structure thus formed is sometimes called "card house structure." The card house structure can retain an unreacted photocurable compound, an unreacted photoinitiator, photoinitiator residue after reaction, and/or the like, as well as undergo pinning of ink droplets. Accordingly, coalescence of adjacent ink droplets can be suppressed. In order to form a card house structure, a photocurable compound and a gelling agent, both of which are dissolved in an ink, are preferably compatible with each other.

In order to achieve stable discharge of ink droplets from an inkjet recording apparatus, good compatibility between a photocurable compound and a gelling agent is required in a sol-state ink (at a high temperature, or about 80°C, for example).

Examples of the gelling agents include aliphatic ketone compounds; aliphatic ester compounds; petroleum waxes, such as paraffin wax, microcrystalline wax, and petrolatum; plant-derived waxes, such as Candelilla wax, carnauba wax, rice bran wax, Japan wax, jojoba oil, solid jojoba wax, and jojoba esters; animal-derived waxes, such as beeswax, lanolin, and spermaceti; mineral waxes, such as montan wax and a hydrogenated wax; hydrogenated castor oil or hydrogenated castor oil derivatives; modified waxes, such as montan wax derivatives, paraffin wax derivatives, microcrystalline wax derivatives, and polyethylene wax derivatives; higher fatty acids, such as behenic acid, arachidic acid, stearic acid, palmitic acid, myristic acid, lauric acid, oleic acid, and erucic acid; higher alcohols, such as stearyl alcohol and behenyl alcohol; hydroxystearic acid, such as 12-hydroxystearic acid; 12-hydroxystearic acid derivatives; fatty acid amides, such as lauramide, stearamide, behenamide, oleamide, erucamide, ricinoleamide, and 12-hydroxystearamide (for example, NIKKA AMIDE series from Nippon Kasei Chemical Co., Ltd., ITOHWAX series from ITOH OIL CHEMICALS CO., LTD., and FATTY AMIDE series from Kao Corporation); N-substituted fatty acid amides, such as N-stearyl stearamide, and N-oleyl palmitamide; specialty fatty acid amides, such as N,N'-ethylenebis(stearamide), N,N'-ethylenebis(12-hydroxystearamide), and N,N'-xylylenebis(stearamide); higher amines, such as dodecylamine, tetradecylamine, and octadecylamine; fatty acid esters, such as stearyl stearate, oleyl palmitate, glycerol fatty acid esters, sorbitan fatty acid esters, propylene glycol fatty acid esters, ethylene glycol fatty acid esters, and polyoxyethylene fatty acid esters (for example, EMALEX series from Nihon Emulsion Co., Ltd., Rikemal series from RIKEN VITAMIN Co., Ltd., and POEM series from RIKEN VITAMIN Co., Ltd.); sucrose fatty acid esters, such as sucrose stearate and sucrose palmitate (for example, RYOTO Sugar Ester series from Mitsubishi-Chemical Foods Corporation); synthetic waxes, such as polyethylene wax and α-olefin-maleic anhydride copolymer wax (UNILIN series from Baker Petrolite); a dimer acid; a dimer diol (for example, Pripol series from Croda International Plc); inulin fatty acid esters, such as stearoyl inulin; dextrin fatty acid esters, such as dextrin palmitate and dextrin myristate (for example, Rheopearl series, from Chiba Flour Milling Co., Ltd.); glyceryl behenate/eicosadioate; polyglyceryl behenate/eicosadioate (for example, NOMCORT series from The Nisshin OilliO Group, Ltd.); amide compounds, such as N-lauroyl-L-glutamic acid dibutylamide and N-(2-ethylhexanoyl)-L-glutamic acid dibutylamide (available from Ajinomoto Fine-Techno Co., Inc.); dibenzylidene sorbitol derivatives, such as 1,3:2,4-bis-O-(benzylidene)-D-glucitol (GEL ALL D available from New Japan Chemical Co., Ltd.); and low-molecular oil gelling agents described in Japanese Patent Application Laid-Open No. 2005-126507, Japanese Patent Application Laid-Open No. 2005-255821, and Japanese Patent Application Laid-Open No. 2010-111790.

The gelling agent preferably contains a C₁₂₋₂₆ linear alkyl group since the above-mentioned "card house structure" is readily formed. The gelling agent may contain a branched chain in the structure.

Specific examples of the gelling agents containing a C₁₂₋₂₆ linear alkyl group include C₁₂₋₂₆ linear alkyl group-containing aliphatic ketone compounds, aliphatic ester compounds, higher fatty acids, higher alcohols, and fatty acid amides.

According to the present invention the gelling agent is an aliphatic ketone compound or an aliphatic ester compound represented by general formula G1 or G2.

General formula G1: R¹-CO-R²

General formula G2: R³-COO-R⁴

In general formulae G1 and G2, R¹ to R⁴ is each independently an alkyl group containing a C₁₂₋₂₆ linear portion. R¹ to R⁴ may contain a branched portion.

In general formula G1, each alkyl group represented by R¹ or R² is preferably, but not limited to, an alkyl group containing a C₁₂₋₂₆ linear portion.

Examples of the aliphatic ketone compounds represented by general formula G1 include 18-pentatriacontanone (C17-C17), dilignoceryl ketone (C24-C24), dibehenyl ketone (C22-C22), distearyl ketone (C18-C18), dieicosyl ketone (C20-C20), dipalmityl ketone (C16-C16), dimyristyl ketone (C14-C14), dilauryl ketone (C12-C12), lauryl myristyl ketone (C12-C14), lauryl palmityl ketone (C12-C16), myristyl palmityl ketone (C14-C16), myristyl stearyl ketone (C14-C18), myristyl behenyl ketone (C14-C22), palmityl stearyl ketone (C16-C18), palmityl behenyl ketone (C16-C22), and stearyl behenyl ketone (C18-C22).

Examples of commercially available products of the compounds represented by general formula G1 include 18-pentatriacontanone (from Alfa Aesar), hentriacontan-16-one (from Alfa Aesar), and KAOWAX T1 (from Kao Corporation). The aliphatic ketone compound contained in an ink may be one compound or a mixture of two or more compounds.

In general formula G2, each alkyl group represented by R³ or R⁴ is preferably, but not limited to, an alkyl group containing a C₁₂₋₂₆ linear portion.

Examples of the aliphatic ester compounds represented by general formula G2 include behenyl behenate (C21-C22), icosyl icosanoate (C19-C20), stearyl stearate (C17-C18), palmityl stearate (C17-16), lauryl stearate (C17-C12), cetyl palmitate (C15-C16), stearyl palmitate (C15-C18), myristyl myristate (C13-C14), cetyl myristate (C13-C16), octyldodecyl myristate (C13-C20), stearyl oleate (C17-C18), stearyl erucate (C21-C18), stearyl linolate (C17-C18), behenyl oleate (C18-C22), myricyl cerotate (C25-C16), stearyl montanate (C27-C18), behenyl montanate (C27-C22), arachidyl linolate (C17-C20), and palmityl triacontanoate (C29-C16).

Examples of commercially available products of the aliphatic ester compounds represented by general formula G2 include UNISTER M-2222SL (from NOF Corporation), EXCEPARL SS (from Kao Corporation), EMALEX CC-18 (from Nihon Emulsion Co., Ltd.), AMREPS PC (from KOKYU ALCOHOL KOGYO CO., LTD.), EXCEPARL MY-M (from Kao Corporation), spermaceti (from NOF Corporation), and EMALEX CC-10 (each from Nihon Emulsion Co., Ltd.). These commercially available products are often mixtures of two or more substances, and thus may be subjected to separation/purification as needed.

The gelling agent contained in an ink may be a mixture of two or more substances, and more preferable example is a mixture of gelling agents selected from the compounds shown in Table 1.

**[Table 1]**

| Type | Name | Product Name | Manufacturer |
|---|---|---|---|
| Aliphatic Ketone Compound | Distearyl ketone | KAOW AX T1 | Kao Corporation |
| | Stearone | 18-Pentatriacontanone | Reagent(Alfa Aesar) |
| | Dipalmityl ketone | Hentriacontan-16-one | Reagent(Alfa Aesar) |
| | Dilauryl ketone | 12-Tricosanone | Reagent(Alfa Aesar) |
| Aliphatic Ester Compound | Stearyl stearate | EXCEPARL SS | Kao Corporation |
| | | UNISTER M-9676 | NOF Corporation |
| | | EMALEX CC-18 | Nihon Emulsion Co., Ltd. |
| | | AMREPS SS | KOKYU ALCOHOL KOGYO CO., LTD. |
| | Cetyl palmitate | AMREPS PC | KOKYU ALCOHOL KOGYO CO., LTD. |
| | Behenyl behenate | UNISTER M-2222SL | NOF Corporation |

In addition, for the purpose of adjusting crystal growth of the gelling agent, fatty acid ester compounds, such as glycerol fatty acid esters, sorbitan fatty acid esters, propylene glycol fatty acid esters, ethylene glycol fatty acid esters, and polyoxyethylene fatty acid esters (for example, EMALEX series from Nihon Emulsion Co., Ltd., Rikemal series from RIKEN VITAMIN Co., Ltd., and POEM series from RIKEN VITAMIN Co., Ltd.) may be used together.

Preferable examples include EMALEX EG-Di-S, DEG-di-S, and PG-di-s (from Nihon Emulsion Co., Ltd.).

The content of the gelling agent in an ink of the present invention is preferably 0.5 mass% or more and 10 mass% or less, more preferably 1 mass% or more and 5 mass% or less.

When two or more gelling agents are used together, it is preferred to adjust an addition ratio of each gelling agent to 5 mass% or more and less than 95 mass%, more preferably 20 mass% or more and less than 80 mass%, based on the total mass of the gelling agents.

### [Photocurable Compounds]

A photocurable compound is a compound that crosslinks or polymerizes upon irradiation with actinic radiation. The photocurable compound contained in the actinic radiation-curable inkjet ink of the present invention substantially consists of a polyfunctional photocurable compound. As used herein, the phrase "polyfunctional photocurable compound" refers to a photocurable compound having two or more photocurable functional groups. As used herein, the term "substantially" means that a ratio of a photocurable compound having only one photocurable functional group (also referred to as "monofunctional photocurable compound") is 0 mass% or more and 7 mass% or less, based on the total mass of the photocurable compound. The ratio of the monofunctional photocurable compound is preferably 0 mass% or more and 5 mass% or less, more preferably 0 mass%, based on the total mass of the photocurable compound.

By using a polyfunctional photocurable compound, reaction efficiency is enhanced, and thus residual unreacted photocurable compound and/or unreacted photoinitiator can be prevented. Moreover, since a proportion of an unreacted photocurable compound is lowered, bleeding out of the unreacted photocurable compound on an ink surface is prevented and consequently the amount of migration can be reduced. Further, since a crosslinking structure of the photocurable compound is formed through curing, the movement of the unreacted photocurable compound, unreacted photoinitiator, photoinitiator residue after reaction, and/or the like is suppressed and consequently the amount of migration can be reduced.

The polyfunctional photocurable compound can be a radical polymerizable compound or a cationic polymerizable compound, and a radical polymerizable compound is preferred.

A radical polymerizable compound is a compound having a radical polymerizable ethylenic unsaturated bond (monomer, oligomer, polymer, or mixture thereof). Only one or two or more radical polymerizable compounds may be contained in an ink.

Examples of the compounds having a radical polymerizable ethylenic unsaturated bond include unsaturated carboxylic acids and salts thereof, unsaturated carboxylic acid ester compounds, unsaturated carboxylic acid urethane compounds, unsaturated carboxylic acid amide compounds and anhydrides thereof, acrylonitrile, styrene, unsaturated polyesters, unsaturated polyethers, unsaturated polyamides, and unsaturated urethanes. Examples of the unsaturated carboxylic acids include (meth)acrylic acid, itaconic acid, crotonic acid, isocrotonic acid, and maleic acid.

Among them, the radical polymerizable compound is preferably an unsaturated carboxylic acid ester compound, more preferably a (meth)acrylate compound. The (meth)acrylate compound may be not only a monomer described hereinafter, but also an oligomer, a mixture of a monomer and an oligomer, a modified compound, or an oligomer having a photocurable functional group, for example.

As used herein, the term "(meth)acrylate" encompasses an acrylate monomer, an acrylate oligomer, a methacrylate monomer, and a methacrylate oligomer.

Examples of the (meth)acrylate compounds include bifunctional monomers, such as triethylene glycol di(meth)acrylate, tetraethylene glycol di(meth)acrylate, polyethylene glycol di(meth)acrylate, tripropylene glycol di(meth)acrylate, polypropylene glycol di(meth)acrylate, 1,4-butanediol di(meth)acrylate, 1,6-hexanediol di(meth)acrylate, 1,9-nonanediol di(meth)acrylate, neopentyl glycol di(meth)acrylate, dimethyloltricyclodecane di(meth)acrylate, bisphenol A-PO adduct di(meth)acrylate, neopentyl glycol hydroxypivalate di(meth)acrylate, polytetramethylene glycol di(meth)acrylate, polyethylene glycol diacrylate, and tripropylene glycol diacrylate; and tri- or higher-functionality monomers, such as trimethylolpropane tri(meth)acrylate, pentaerythritol tri(meth)acrylate, pentaerythritol tetra(meth)acrylate, dipentaerythritol hexa(meth)acrylate, ditrimethylolpropane tetra(meth)acrylate, propoxylated glycerol tri(meth)acrylate, and ethoxylated pentaerythritol tetra(meth)acrylate.

In view of photosensitivity and the like, the (meth)acrylate compound is preferably stearyl (meth)acrylate, lauryl (meth)acrylate, isostearyl (meth)acrylate, diethylene glycol ethyl ether (meth)acrylate, isobornyl (meth)acrylate, tetraethylene glycol di(meth)acrylate, and propoxylated glycerol tri(meth)acrylate.

The (meth)acrylate compound may be a modified compound. Examples of the modified compounds include ethylene oxide-modified (meth)acrylate compounds, such as ethylene oxide-modified trimethylolpropane tri(meth)acrylate and ethylene oxide-modified pentaerythritol tetra(meth)acrylate; caprolactone-modified (meth)acrylate compounds, such as caprolactone-modified trimethylolpropane tri(meth)acrylate; and caprolactam-modified (meth)acrylate compounds, such as caprolactam-modified dipentaerythritol hexa(meth)acrylate.

In an actinic radiation-curable inkjet ink, the photocurable compound is preferably at least partially an ethylene oxide-modified (meth)acrylate compound. Such an ethylene oxide-modified (meth)acrylate compound exhibits high photosensitivity, and consequently an ink readily forms a card house structure during gelation at a low temperature. Further, the ethylene oxide-modified (meth)acrylate compound is readily soluble in other ink components at a high temperature and exhibits low curing shrinkage, and consequently curling of printed articles is suppressed.

Examples of the ethylene oxide-modified (meth)acrylate compounds include 4EO-modified hexanediol diacrylate (CD 561, molecular weight 358), 3EO-modified trimethylolpropane triacrylate (SR 454, molecular weight 429), 6EO-modified trimethylolpropane triacrylate (SR 499, molecular weight 560), 4EO-modified pentaerythritol tetraacrylate (SR 494, molecular weight 529) (from Sartomer); polyethylene glycol diacrylate (NK Ester A-400, molecular weight 508), polyethylene glycol diacrylate (NK Ester A-600, molecular weight 742), polyethylene glycol dimethacrylate (NK Ester 9G, molecular weight 536), polyethylene glycol dimethacrylate (NK Ester 14G, molecular weight 770) (from Shin-Nakamura Chemical Co., Ltd.); tetraethylene glycol diacrylate (V#335HP, molecular weight 302) (from Osaka Organic Chemical Industry, Ltd.); 3PO-modified trimethylolpropane triacrylate (Photomer 4072, molecular weight 471) (from Cognis Holding GmbH); 1,10-decanediol dimethacrylate (NK Ester DOD-N, molecular weight 310), tricyclodecanedimethanol diacrylate (NK Ester A-DCP, molecular weight 304), and tricyclodecanedimethanol dimethacrylate (NK Ester DCP, molecular weight 332) (from Shin-Nakamura Chemical Co., Ltd.).

The (meth)acrylate compound may be a polymerizable oligomer. Examples of the polymerizable oligomers include an epoxy (meth)acrylate oligomer, an aliphatic urethane (meth)acrylate oligomer, an aromatic urethane (meth)acrylate oligomer, a polyester (meth)acrylate oligomer, and a linear (meth)acrylic oligomer.

The cationic polymerizable compound can be an epoxy compound, a vinyl ether compound, and an oxetane compound, for example. Only one or two or more cationic polymerizable compounds may be contained in an actinic radiation-curable inkjet ink.

The epoxy compound is, for example, an aromatic epoxide, an alicyclic epoxide, or an aliphatic epoxide, and preferably an aromatic epoxide or an alicyclic epoxide in order to enhance curability.

The aromatic epoxide can be a di- or polyglycidyl ether obtained by reacting a polyhydric phenol or an alkylene oxide adduct thereof, and epichlorohydrin. Examples of the polyhydric phenols or alkylene oxide adducts thereof, which are to be reacted, include bisphenol A or an alkylene oxide adduct thereof. The alkylene oxide of the alkylene oxide adduct can be ethylene oxide or propylene oxide, for example.

The alicyclic epoxide can be a cycloalkane oxide-containing compound obtained by epoxidizing a cycloalkane-containing compound with an oxidizing agent, such as hydrogen peroxide or a peroxy acid. The cycloalkane of the cycloalkane oxide-containing compound can be cyclohexene or cyclopentene.

The aliphatic epoxide can be a di- or polyglycidyl ether obtained by reacting an aliphatic polyhydric alcohol or an alkylene oxide adduct thereof, and epichlorohydrin. Examples of the aliphatic polyhydric alcohols include alkylene glycols, such as ethylene glycol, propylene glycol, and 1,6-hexanediol. The alkylene oxide of the alkylene oxide adduct can be ethylene oxide or propylene oxide, for example.

Examples of the vinyl ether compounds include di- or trivinyl ether compounds, such as ethylene glycol divinyl ether, diethylene glycol divinyl ether, triethylene glycol divinyl ether, propylene glycol divinyl ether, dipropylene glycol divinyl ether, butanediol divinyl ether, hexanediol divinyl ether, cyclohexanedimethanol divinyl ether, and trimethylolpropane trivinyl ether.

The content of the polyfunctional photocurable compound in an actinic radiation-curable inkjet ink is preferably 1 mass% or more and 97 mass% or less, more preferably 30 mass% or more and 95 mass% or less.

### [Photoinitiators]

The actinic radiation-curable inkjet ink of the present invention contains one or more photoinitiators, the photoinitiators include an α-hydroxy ketone compound, and the molecular weight of the α-hydroxy ketone compound is 210 or more and 3,000 or less.

### (α-Hydroxy Ketone Compounds)

Due to its excellent decomposition properties by a short-wavelength light source (e.g., 200 nm or longer and shorter than 350 nm), an α-hydroxy ketone compound is preferred, from a viewpoint of reducing an amount of migration and enhancing surface curability of an ink. Further, an α-hydroxy ketone compound, due to its excellent compatibility with the polyfunctional photocurable compound and/or the gelling agent, can enhance surface curability of an ink due to smooth progress of polymerization over the entire ink, and thus the amount of migration originated from the ink surface can be reduced.

Examples of the α-hydroxy ketone compounds include 2-hydroxy-2-methyl-1-phenylpropan-1-one, 1-(4-isopropylphenyl)-2-hydroxy-2-methylpropan-1-one, 4-(2-hydroxyethoxy)phenyl (2-hydroxy-2-propyl) ketone, and 1-hydroxycyclohexyl phenyl ketone. Examples of commercially available products of the α-hydroxy ketone compounds include ESACURE KIP 150 (from DKSH Management Ltd.), IRGACURE 127 (from BASF SE), IRGACURE 2959 (from BASF SE), and IRGACURE 184 (from BASF SE). Among them, the α-hydroxy ketone compound is preferably IRGACURE 127, in view of a reduced amount of migration and surface curability of an ink. The molecular weight of the α-hydroxy ketone compound is 210 or more and 3,000 or less. When the molecular weight of the α-hydroxy ketone compound is less than 210, migration becomes noticeable when the compound remains as a residue, and consequently the amount of migration cannot be reduced. Meanwhile, when the molecular weight exceeds 3,000, discharge stability sometime deteriorates.

In view of a reduced amount of migration and surface curability of an ink, the content of the α-hydroxy ketone compound is preferably 1 mass% or more and 10 mass% or less, more preferably 2 mass% or more and 8 mass% or less.

Regardless of whether the α-hydroxy ketone compound is a single compound or a mixture of a plurality of compounds with different carbon numbers or the like, the weight-average molecular weight is preferably 210 or more and 3,000 or less. The weight-average molecular weight is measured through gel permeation chromatography (GPC). The value is a weight-average molecular weight based on polystyrene.
Solvent: tetrahydrofuran
Column: TSKgel G4000 + 2500 + 2000HXL (from Tosoh Corporation)
Column temperature: 40°C
Injection volume: 100 µL
Detector: RI Model 504 (from GL Sciences Inc.)
Pump: L 6000 (from Hitachi, Ltd.)
Flow rate: 1.0 mL/min
Calibration curve: Calibration curve using 13 samples of STK standard polystyrene (from Tosoh Corporation) with weight-average molecular weight of 1,000,000 to 500 is used. The 13 samples are used at nearly the same interval.

As the photoinitiator, a compound other than the α-hydroxy ketone compound may be contained further. The photoinitiator encompasses, for example, an intramolecular bond-cleavage type and an intramolecular hydrogen-abstraction type. Examples of the intramolecular bond cleavage-type photoinitiators include an α-hydroxy ketone compound and an acylphosphine compound. Examples of the intramolecular hydrogen abstraction-type photoinitiators include an α-amino ketone compound, a benzophenone compound, and a thioxanthone compound. In view of surface curability of an ink, the intramolecular bond cleavage-type photoinitiator and the intramolecular hydrogen abstraction-type photoinitiator are preferably used together.

### (Acylphosphine Compounds)

Examples of the acylphosphine compounds include benzoin derivatives, such as benzoin, benzoin methyl ether, and benzoin isopropyl ether; and bis(2,4,6-trimethylbenzoyl)phenylphosphine oxide. Examples of commercially available products of the acylphosphine compounds include IRGACURE 819 (BASF SE) and DAROCUR TPO (BASF SE). Among them, the acylphosphine compound is preferably IRGACURE 819, in view of a reduced amount of migration and surface curability of an ink.

Regardless of whether the acylphoshpine compound is a single compound or a mixture of a plurality of compounds with different carbon numbers or the likes, the weight-average molecular weight is preferably 210 or more and 3,000 or less. The weight-average molecular weight is measured through gel permeation chromatography (GPC). The value is a weight-average molecular weight based on polystyrene.

Examples of the intramolecular hydrogen abstraction-type photoinitiators will be described as follows.

### (α-Amino Ketone Compounds)

Examples of the α-amino ketone compounds include 2-benzyl-2-dimethylamino-1 -(4-morpholinophenyl)butanone-1, 2-dimethylamino-2-(4-methylbenzyl)-1-(4-morpholin-4-ylphenyl)butan-1-one, and 2-methyl-1-(4-methylthiophenyl)-2-morpholinopropan-1-one. Examples of commercially available products of the α-amino ketone compounds include IRGACURE 369 (from BASF SE) and IRGACURE 907 (from BASF SE). Among them, the α-amino ketone compound is preferably IRGACURE 369, in view of a reduced amount of migration and surface curability of an ink.

Regardless of whether the α-amino ketone compound is a single compound or a mixture of a plurality of compounds with different carbon numbers or the likes, the weight-average molecular weight is preferably 210 or more and 3,000 or less. The weight-average molecular weight is measured through gel permeation chromatography (GPC). The value is a weight-average molecular weight based on polystyrene.

When X is a content of the α-hydroxy ketone compound based on a total mass of an ink, Y is a content of the acylphosphine compound based on the total mass of the ink, and Z is a content of the α-amino ketone compound based on the total mass of the ink, satisfying a mass ratio of X : (Y + Z) = 10 : 1 to 1 : 3 is preferred, in view of a reduced amount of migration and surface curability of an ink.

### (Benzophenone Compounds)

Examples of the benzophenone compounds include benzophenone, methyl o-benzoylbenzoate, 4-phenylbenzophenone, 4,4'-dichlorobenzophenone, hydroxybenzophenone, 4-benzoyl-4'-methyldiphenyl sulfide, an acrylated benzophenone, 3,3',4,4'-tetrakis(t-butylperoxycarbonyl)benzophenone, and 3,3'-dimethyl-4-methoxybenzophenone. Examples of commercially available products of the benzophenone compounds include Omnipol BP (from Rahn AG), Speedcure BMS (from Lambson Limited), and Speedcure PBZ (from Lambson Limited). The molecular weight of the benzophenone compound is preferably 300 or more and 3,000 or less, in view of a reduced amount of migration and discharge stability.

Regardless of whether the benzophenone compound is a single compound or a mixture of a plurality of compounds with different carbon numbers or the likes, the weight-average molecular weight is preferably 300 or more and 3,000 or less. The weight-average molecular weight is measured through gel permeation chromatography (GPC). The value is a weight-average molecular weight based on polystyrene.

### (Thioxanthone Compounds)

Examples of the thioxanthone compounds include 2-isopropylthioxanthone, 2,4-dimethylthioxanthone, 2,4-diethylthioxanthone, and 2,4-dichlorothioxanthone. Examples of commercially available products of the thioxanthone compounds include Speedcure 7010 (from Lambson Limited), Speedcure CPTX (from Lambson Limited), and Speedcure ITX (from Lambson Limited). The molecular weight of the thioxanthone compound is preferably 300 or more and 3,000 or less, in view of a reduced amount of migration and discharge stability.

Regardless of whether the thioxanthone compound is a single compound or a mixture of a plurality of compounds with different carbon numbers or the likes, the weight-average molecular weight is preferably 300 or more and 3,000 or less. The weight-average molecular weight is measured through gel permeation chromatography (GPC). The value is a weight-average molecular weight based on polystyrene.

Although depending on types or the like of actinic radiation and/or photocurable compound, the content of the photoinitiator in an actinic radiation-curable inkjet ink is preferably 0.01 mass% or more and 12 mass% or less.

The actinic radiation-curable inkjet ink may contain a photoacid generator as a photoinitiator. Examples of the photoacid generators include compounds used for a chemically amplified photoresist and/or a photocationic polymerization (see pages 187 to 192 of Imejingu-you Yuki Zairyou (Organic Materials for Imaging), edited by The Japanese Research Association for Organic Electronics Materials, Bunshin-publishing, 1993).

### [Colorants]

The actinic radiation-curable inkjet ink of the present invention may further contain a colorant as needed. The colorant can be a dye or a pigment, but is preferably a pigment due to good dispersibility in ink components as well as excellent weatherability. The pigment can be, but not limited to, organic pigments or inorganic pigments with the following Color Index Constitution Numbers, for example.

Examples of red or magenta pigments include Pigment Red 3, 5, 19, 22, 31, 38, 43, 48:1, 48:2, 48:3, 48:4, 48:5, 49:1, 53:1, 57:1, 57:2, 58:4, 63:1, 81, 81:1, 81:2, 81:3, 81:4, 88, 104, 108, 112, 122, 123, 144, 146, 149, 166, 168, 169, 170, 177, 178, 179, 184, 185, 208, 216, 226, 257, Pigment Violet 3, 19, 23, 29, 30, 37, 50, 88, Pigment Orange 13, 16, 20, 36, and a mixture thereof. Examples of a blue or cyan pigments include Pigment Blue 1, 15, 15:1, 15:2, 15:3, 15:4, 15:6, 16, 17:1, 22, 27, 28, 29, 36, 60, and a mixture thereof. Examples of green pigments include Pigment Green 7, 26, 36, 50, and a mixture thereof. Examples of yellow pigments include Pigment Yellow 1, 3, 12, 13, 14, 17, 34, 35, 37, 55, 74, 81, 83, 93, 94, 95, 97, 108, 109, 110, 137, 138, 139, 153, 154, 155, 157, 166, 167, 168, 180, 185, 193, and a mixture thereof. Examples of black pigments include Pigment Black 7, 28, 26, and a mixture thereof.

Examples of commercially available products of the pigments include Chromofine Yellow 2080, 5900, 5930, AF-1300, 2700L, Chromofine Orange 3700L, 6730, Chromofine Scarlet 6750, Chromofine Magenta 6880, 6886, 6891N, 6790, 6887, Chromofine Violet RE, Chromofine Red 6820, 6830, Chromofine Blue HS-3, 5187, 5108, 5197, 5085N, SR-5020, 5026, 5050, 4920, 4927, 4937, 4824, 4933GN-EP, 4940, 4973, 5205, 5208, 5214, 5221, 5000P, Chromofine Green 2GN, 2GO, 2G-550D, 5310, 5370, 6830, Chromofine Black A-1103, SEIKAFAST YELLOW 10GH, A-3, 2035, 2054, 2200, 2270, 2300, 2400(B), 2500, 2600, ZAY-260, 2700(B), 2770, SEIKAFAST RED 8040, C405(F), CA 120, LR-116, 1531B, 8060R, 1547, ZAW-262, 1537B, GY, 4R-4016, 3820, 3891, ZA-215, SEIKAFAST CARMINE 6B1476T-7, 1483LT, 3840, 3870, SEIKAFAST BORDEAUX 10B-430, SEIKALIGHT ROSE R40, SEIKALIGHT VIOLET B 800, 7805, SEIKAFAST MAROON 460N, SEIKAFAST ORANGE 900, 2900, SEIKALIGHT BLUE C 718, A 612, Cyanine Blue 4933M, 4933GN-EP, 4940, 4973 (from Dainichiseika Color & Chemicals Mfg. Co., Ltd.); KET Yellow 401, 402, 403, 404, 405, 406, 416, 424, KET Orange 501, KET Red 301, 302, 303, 304, 305, 306, 307, 308, 309, 310, 336, 337, 338, 346, KET Blue 101, 102, 103,104, 105, 106, 111, 118, 124, KET Green 201 (from Dainippon Ink & Chemicals Inc.); Colortex Yellow 301, 314, 315, 316, P-624, 314, U10GN, U3GN, UNN, UA-414, U263, Finecol Yellow T-13, T-05, Pigment Yellow 1705, Colortex Orange 202, Colortex Red 101, 103, 115, 116, D3B, P-625, 102, H-1024, 105C, UFN, UCN, UBN, U3BN, URN, UGN, UG276, U456, U457, 105C, USN, Colortex Maroon 601, Colortex Brown B610N, Colortex Violet 600, Pigment Red 122, Colortex Blue 516, 517, 518, 519, A818, P-908, 510, Colortex Green 402, 403, Colortex Black 702, U905 (from Sanyo Color Works, Ltd.); Lionol Yellow 1405G, Lionol Blue FG7330, FG7350, FG7400G, FG7405G, ES, ESP-S (from Toyo Ink Co., Ltd.); Toner Magenta E 02, Permanent Rubin F6B, Toner Yellow HG, Permanent Yellow GG-02, Hostaperm Blue B2G (from Hoechst AG); Novoperm P-HG, Hostaperm Pink E, Hostaperm Blue B2G (from Clariant); Carbon Black #2600, #2400, #2350, #2200, #1000, #990, #980, #970, #960, #950, #850, MCF 88, #750, #650, MA600, MA7, MA8, MA11, MA100, MA100R, MA77, #52, #50, #47, #45, #45L, #40, #33, #32, #30, #25, #20, #10, #5, #44, and CF9 (from Mitsubishi Chemical Corporation).

Pigments can be dispersed using, for example, a ball mill, a sand mill, an attritor, a roll mill, an agitator, a Henschel mixer, a colloid mill, an ultrasonic homogenizer, a pearl mill, a wet jet mill, or a paint shaker. Pigments are preferably dispersed so that pigment particles have a volume-average particle size of preferably 0.08 to 0.5 µm and a maximum particle size of preferably 0.3 to 10 µm, more preferably 0.3 to 3 µm. Dispersing of a pigment is adjusted by selection of a pigment, a dispersant, and a dispersion medium, dispersing conditions, filtering conditions, and/or the like.

### [Pigment Dispersants]

The actinic radiation-curable inkjet ink of the present invention may contain a pigment dispersant. Incorporation of a pigment dispersant into an ink can enhance dispersibility of a pigment. The pigment dispersants more preferably include a comb-type block copolymer having a tertiary amine (hereinafter also simply referred to as "copolymer"). As used herein, "comb-type block copolymer" refers to a copolymer composed of a linear polymer, which forms a main chain, graft-polymerized with different polymer(s) as side chains for every unit of the monomers constituting the main chain.

The content of the pigment dispersant is preferably, but not limited to, 2.0 mass% or more and 8.0 mass% or less. The content of the pigment dispersant is more preferably 2.0 mass% or more and 5.0 mass% or less.

Examples of the pigment dispersants, other than the copolymer, may include a hydroxyl-containing carboxylic acid ester, a salt of a long-chain polyaminoamide and a high-molecular-weight acid ester, a high-molecular-weight polycarboxylic acid salt, a salt of a long-chain polyaminoamide and a polar acid ester, a high-molecular-weight unsaturated acid ester, a polymeric copolymerized product, a modified polyurethane, a modified polyacrylate, a polyether ester anionic surfactant, a naphthalenesulfonic acid-formalin condensate salt, an aromatic sulfonic acid-formalin condensate salt, a polyoxyethylene alkyl phosphate ester, polyoxyethylene nonyl phenyl ether, and stearylamine acetate. Examples of commercially available products of the pigment dispersants include Solsperse series (from Avecia Limited) and PB series (from Ajinomoto Fine-Techno Co., Inc.).

The copolymer having a tertiary amine can strongly adsorb to acidic groups on a surface of a pigment due to increased electron density on the amine, which is a functional group with adsorbing properties to a pigment, and thus strong basicity exhibited. Accordingly, the copolymer of the present invention does not readily dissociate from a pigment even at about 85°C at which an inkjet ink is ejected. Further, by using a copolymer having a tertiary amine in the main chain as the copolymer of the present invention, the side chain becomes compatible with a photocurable compound and the pigment dispersant itself becomes readily dispersed, thereby improving dispersibility of a pigment, to which the pigment dispersant adsorbs.

A substituent on the amine is preferably, but not limited to, a C₁ or C₂ alkyl group.

The copolymer is not particularly limited as long as it is a pigment dispersant that satisfies the above-mentioned conditions. Preferable examples of such pigment dispersants include BYK-2164, BYK-168, BYK N-22024 (from BYK-Chemie GmbH), BYK JET-9150, BYK JET-9151 (from ALTANA AG), EFKA 4310, EFKA 4320, EFKA 4401 (from BASF SE), Solsperse 39000 (from Avecia Limited), and Ajisper PB-821 (from Ajinomoto Fine-Techno Co., Inc.).

A secondary or a primary amine of a comb-type block copolymer may be converted to a tertiary amine by replacing hydrogen on the secondary or the primary amine with other substituents through a commonly known method. A secondary amine or a primary amine of a comb-type block copolymer can be converted to an alkyl-substituted tertiary amine by reacting with an alcohol, such as decyl alcohol, in the presence of a reducing catalyst.

The actinic radiation-curable inkjet ink of the present invention may further contain a dispersion aid as needed. The dispersion aid may be selected corresponding to a pigment.

The total amount of a pigment dispersant and a dispersion aid is preferably 1 to 50 mass%, based on a pigment.

The actinic radiation-curable inkjet ink of the present invention may further contain a dispersion medium for dispersing a pigment as needed. A solvent may be incorporated into an ink as a dispersion medium, but the above-mentioned photocurable monomer (especially, a monomer with a low viscosity) is preferably used as a dispersion medium in order to reduce residual solvent in images to be formed.

The dye can be an oil-soluble dye, for example. Examples of the oil-soluble dyes will be described as follows. Examples of magenta dyes include MS Magenta VP, MS Magenta HM-1450, MS Magenta HSo-147 (from Mitsui Toatsu Chemicals Inc.), AIZEN SOT Red-1, AIZEN SOT Red-2, AIZEN SOT Red-3, AIZEN SOT Pink-1, Spilon Red GEH special (from Hodogaya Chemical Co., Ltd.), RESOLIN Red FB 200%, Macrolex Red Violet R, Macrolex ROT5B (from Bayer Holding Ltd.), Kayaset Red B, Kayaset Red 130, Kayaset Red 802 (from Nippon Kayaku Co., Ltd.), Phloxine Rose Bengal, Acid Red (from Daiwa Dyestuff Mfg. Co., Ltd.), HSR-31, Diaresin Red K (from Mitsubishi Kasei Corporation), and Oil Red (from BASF Japan Ltd.).

Examples of cyan dyes include MS Cyan HM-1238, MS Cyan HSo-16, Cyan HSo-144, MS Cyan VPG (from Mitsui Toatsu Chemicals Inc.), AIZEN SOT Blue-4 (from Hodogaya Chemical Co., Ltd.), RESOLIN BR. Blue BGLN 200%, Macrolex Blue RR, CERES Blue GN, SIRIUS SUPRATURQ. Blue Z-BGL, SIRIUS SUPRATURQ. Blue FB-LL 330% (from Bayer Holding Ltd.), Kayaset Blue FR, Kayaset Blue N, Kayaset Blue 814, Turq. Blue GL-5 200, Light Blue BGL-5200 (from Nippon Kayaku Co., Ltd.), Daiwa Blue 7000, Oleosol Fast Blue GL (from Daiwa Dyestuff Mfg. Co., Ltd.), Diaresin Blue P (from Mitsubishi Kasei Corporation), Sudan Blue 670, Neopen Blue 808, and Zapon Blue 806 (from BASF Japan Ltd.).

Examples of yellow dyes include MS Yellow HSm-41, Yellow KX-7, Yellow EX-27 (from Mitsui Toatsu Chemicals Inc.), AIZEN SOT Yellow-1, AIZEN SOT Yellow-3, AIZEN SOT Yellow-6 (from Hodogaya Chemical Co., Ltd.), Macrolex Yellow 6G, Macrolex Fluor. Yellow 10GN (from Bayer Holding Ltd.), Kayaset Yellow SF-G, Kayaset Yellow 2G, Kayaset Yellow A-G, Kayaset Yellow E-G (from Nippon Kayaku Co., Ltd.), Daiwa Yellow 330HB (from Daiwa Dyestuff Mfg. Co., Ltd.), HSY-68 (from Mitsubishi Kasei Corporation), Sudan Yellow 146, and Neopen Yellow 075 (from BASF Japan Ltd.).

Examples of black dyes include MS Black VPC (from Mitsui Toatsu Chemicals Inc.), AIZEN SOT Black-1, AIZEN SOT Black-5 (from Hodogaya Chemical Co., Ltd.), RESOLIN Black GSN 200%, RESOLIN Black BS (from Bayer Holding Ltd.), Kayaset Black A-N (from Nippon Kayaku Co., Ltd.), Daiwa Black MSC (from Daiwa Dyestuff Mfg. Co., Ltd.), HSB-202 (from Mitsubishi Kasei Corporation), Neptune Black X60, and Neopen Black X58 (from BASF Japan Ltd.).

The content of the colorant is preferably 0.1 to 20 mass%, more preferably 0.4 to 10 mass%, based on a total amount of an ink.

### [Other Components]

The actinic radiation-curable inkjet ink of the present invention may further contain a dispersion aid as needed. The dispersion aid may be selected corresponding to a pigment. The actinic radiation-curable inkjet ink of the present invention may further contain a dispersion medium for dispersing a pigment as needed. A solvent may be incorporated into an ink as a dispersion medium, but the dispersion medium is preferably a photocurable monomer in order to suppress residual solvent in images to be formed.

The actinic radiation-curable inkjet ink of the present invention may further contain a photoinitiator auxiliary agent, and/or a polymerization inhibitor, for example. The photoinitiator auxiliary agent may be a tertiary amine compound, and is preferably an aromatic tertiary amine compound. Examples of the aromatic tertiary amine compounds include N,N-dimethylaniline, N,N-diethylaniline, N,N-dimethyl-p-toluidine, ethyl p-N,N-dimethylaminobenzoate, isoamylethyl p-N,N-dimethylaminobenzoate, N,N-di(hydroxyethyl)aniline, triethylamine, and N,N-dimethylhexylamine. Among them, ethyl p-N,N-dimethylaminobenzoate and isoamylethyl p-N,N-dimethylaminobenzoate are preferred. Only one or two or more these compounds may be contained in an actinic radiation-curable inkjet ink.

Examples of the polymerization inhibitors include (alkyl)phenol, hydroquinone, catechol, resorcin, p-methoxyphenol, t-butylcatechol, t-butylhydroquinone, pyrogallol, 2,2-diphenyl-1-picrylhydrazyl, phenothiazine, p-benzoquinone, nitrosobenzene, 2,5-di-t-butyl-p-benzoquinone, bis(dithiobenzoyl) disulfide, picric acid, cupferron, N-nitrosophenylhydroxylamine aluminum salt, tri-p-nitrophenylmethyl, N-(3-oxyanilino-1,3-dimethylbutylidene)aniline oxide, dibutylcresol, cyclohexanone oxime cresol, guaiacol, o-isopropylphenol, butyraldehyde oxime, methyl ethyl ketone oxime, and cyclohexanone oxime.

The actinic radiation-curable inkjet ink of the present invention may further contain at least either an UV absorber or an antioxidant, from a viewpoint of enhancing weatherability of a cured article.

The UV absorber preferably has a long wave edge of the absorption wavelength of 410 nm or shorter, in view of light resistance and ozone resistance. The absorption wavelength of the UV absorber can be determined by measuring a UV-Vis absorption spectrum. The content of the UV absorber is preferably 2 mass% or less, more preferably 1 mass% or less, further preferably 0.5 mass% or less, in view of curability. Meanwhile, the content of the UV absorber is preferably 0.1 mass% or more, from a viewpoint of absorbing UV irradiation and satisfactorily lowering photocatalyst action of an inorganic white pigment.

The content of the antioxidant is preferably 0.8 mass% or less, more preferably 0.5 mass% or less, in view of curability. Meanwhile, the content of the antioxidant is preferably 0.05 mass% or more, from a viewpoint of scavenging radicals generated in a cured film of an ink and satisfactorily suppressing oxidation of a resin and the like.

In view of discharge stability and curability, the total amount of a UV absorber and an antioxidant is preferably 2.0 mass% or less, more preferably 1.0 mass% or less, based on the total mass of an ink.

The actinic radiation-curable inkjet ink of the present invention may further contain components other than the above-mentioned ones as needed. Other components may be various additives and/or other resins, for example. Examples of the additives include a surfactant, a levelling additive, a matting agent, an IR absorber, an antimicrobial agent, and a basic compound for enhancing storage stability of an ink. Examples of the basic compounds include basic organic compounds, such as a basic alkali metal compound, basic alkaline earth metal compound, and an amine. Examples of the other resins include resins and the likes for adjusting physical properties of a cured film, such as a polyester resin, a polyurethane resin, a vinyl resin, an acrylic resin, and a rubber resin.

### [Preparation of Actinic Radiation-curable Inkjet Inks]

The actinic radiation-curable inkjet ink of the present invention can be obtained by mixing a photocurable compound, a photoinitiator, a gelling agent, and optional each component under heating. The resulting mixture is preferably filtered using a predetermined filter. In this step, a dispersion containing a pigment and a dispersant may be prepared in advance, and the rest components may be added into the dispersion and mixed with heating.

### [Physical Properties of Actinic Radiation-curable Inkjet Inks]

The actinic radiation-curable inkjet ink of the present invention, which contains a gelling agent, can undergo temperature-dependent reversible sol-gel phase transition. A sol-gel phase transition-type actinic radiation-curable ink is a sol at a high temperature (about 80°C, for example) and thus can be discharged from an ink-discharge recording head, but becomes a gel by spontaneous cooling after the impact on a recording medium. This can suppress coalescence of adjacent ink droplets and enhance image quality.

In order to enhance ejection properties of the actinic radiation-curable inkjet ink of the present invention, the viscosity of the ink is preferably a certain value or lower at a high temperature. Specifically, the viscosity of the ink at 80°C is preferably 3 mPa·s or higher and 20 mPa·s or lower, more preferably 6.0 mPa·s or higher and 15.0 mPa·s or lower, further preferably 7.0 mPa·s or higher and 12.0 mPa·s or lower. Meanwhile, in order to suppress coalescence of adjacent ink droplets, the viscosity of the ink is preferably a certain value or higher at room temperature after the impact. Specifically, the viscosity of the actinic radiation-curable inkjet ink at 25°C is preferably 1000 mPa·s or higher.

The viscosity at 80°C, the viscosity at 25°C, and the gelation temperature of the actinic radiation-curable inkjet ink of the present invention can be determined by measuring dynamic viscoelasticity of the ink during temperature changes using a rheometer. Specifically, a temperature-dependent viscosity change curve is obtained by heating the ink to 100°C and then cooling to 25°C at a shear rate of 11.7 (1/s) and a temperature lowering rate of 0.1°C/s. The viscosity at 80°C and the viscosity at 25°C are determined by reading the respective viscosities at 80°C and 25°C in the temperature-dependent viscosity change curve. The gelation temperature is determined as a temperature at which the viscosity becomes 200 mPa·s in the temperature-dependent viscosity change curve.

A Physica MCR series stress-controlled rheometer (from Anton Paar GmbH) can be used as a rheometer. A diameter of the cone plate can be set to 75 mm and a cone angle can be set to 1.0°.

### 2. Inkjet Recording Method

The inkjet recording method includes steps of: 1) discharging the actinic radiation-curable inkjet ink of the present invention on a recording medium, and 2) irradiating the ink discharged on the recording medium with actinic radiation to cure the ink.
1) In the discharging step, an inkjet ink stored in a discharge recording head may be discharged as droplets through nozzles toward a recording medium.
2) In the curing step, the ink impacted on the recording medium is irradiated with actinic radiation. Actinic radiation for irradiation may be appropriately selected corresponding to a type of photocurable compound, and can be UV rays or electron beams.

The conveying speed of the recording medium is preferably 30 m/min or faster and 120 m/min or slower, in view of high-speed recording.

### (Light Sources)

A short-wavelength light source (200 nm or longer and shorter than 350 nm, for example) is typically preferred in terms of surface curability of an ink, and thus it is desirable to select a short-wavelength light source also in the present invention. By combining such a light source with an α-hydroxy ketone compound, which has large absorption of a short wavelength, reduction in the amount of migration and surface curability of an ink can be effectively maximized. Further, it is desirable to select a short-wavelength light source with as low radiant heat as possible. This is because there is a risk of lowering surface curability of an ink since radiant heat melts a crystallized gel and consequently a viscosity required for suppressing oxygen inhibition cannot be maintained. This is also because there is a risk of noticeable migration since a crystalline structure is collapsed and consequently the movement of unreacted components cannot be suppressed. Accordingly, selecting a short-wavelength LED with a peak emission wavelength of shorter than 350 nm is more preferred since radiant heat can be suppressed.

### (Recording Media)

As recording media for printed articles, YUPO synthetic paper, various plastic for use in soft packaging, and films thereof can be used, in addition to common uncoated paper, coated paper, and the like. Examples of various plastic films include a PP film, a PET film, an OPS film, an OPP film, an ONy film, a PVC film, a PE film, and a TAC film. Other plastic, such as a polycarbonate, an acrylic resin, ABS, a polyacetal, PVA, and a rubber can also be used. Alternatively, a metal or glass is also applicable. As a recording medium for use in food packaging, plastic is preferred, and polypropylene plastic is more preferred.

Ink droplets are attached on a recording medium by discharging ink droplets from an inkjet recording head. In order to form high-quality images repeatedly and reproducibly, setting the temperature of a recording medium upon the impact of ink droplets to 20°C or higher and 40°C or lower is preferred.

### 3. Inkjet Recording Apparatus

In the following, described will be an inkjet recording apparatus of an actinic radiation cure-type inkjet system, in which the actinic radiation-curable inkjet ink of the present invention is used. The inkjet recording apparatus of the actinic radiation cure-type inkjet system encompasses a line recording type (single-pass recording type) and a serial recording type. Although the type may be selected corresponding to required image resolution and/or recording speed, a line recording type (single-pass recording type) is preferred, in view of high-speed recording.

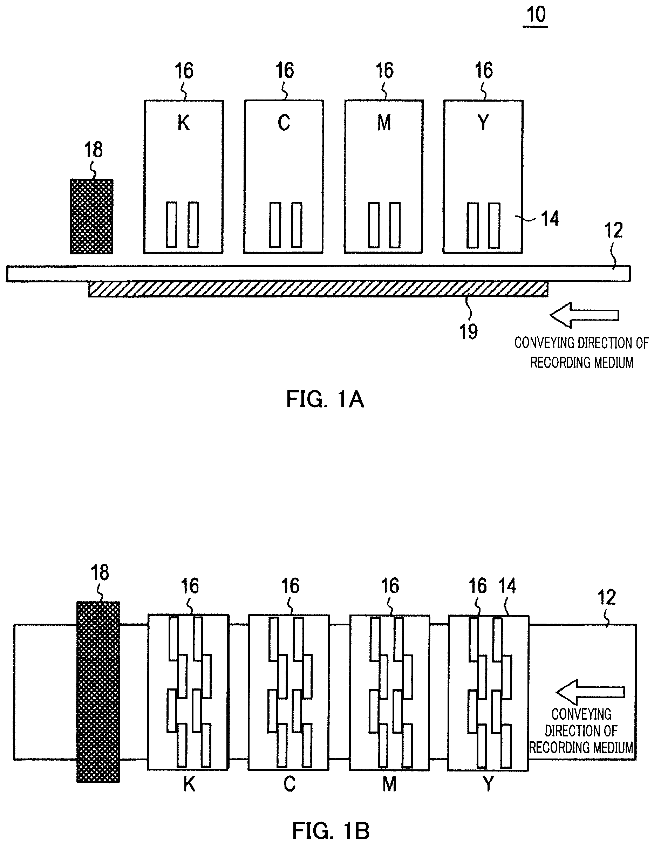

FIGS. 1A and 1B illustrate an example of a configuration of the main part of a line recording-type inkjet recording apparatus. FIG. 1A is a side view and FIG. 1B is a top view. As illustrated in FIGS. 1A and 1B, inkjet recording apparatus 10 includes head carriages 16 that house a plurality of ink-discharge recording heads 14, actinic radiation irradiation section 18 that covers the entire width of recording medium 12 and is disposed on a downstream side (in the conveying direction of the recording medium) of head carriages 16, and temperature control section 19 disposed on the lower surface of recording medium 12.

Head carriages 16 are fixed/disposed to cover the entire width of recording medium 12, and house a plurality of ink-discharge recording heads 14, which are provided for each color. Inks are fed to ink-discharge recording heads 14. Inks, for example, may be fed directly or through ink feeding units (not illustrated) from ink cartridges or the likes (not illustrated), which are detachably mounted on inkjet recording apparatus 10.

A plurality of ink-discharge recording heads 14 for each color are disposed in the conveying direction of recording medium 12. The number of ink-discharge recording heads 14 disposed in the conveying direction of recording medium 12 is set corresponding to the nozzle density of ink-discharge recording heads 14 and the resolution of printing images. Dpi represents the number of ink droplets (dots) per 2.54 cm.

Actinic radiation irradiation section 18 covers the entire width of recording medium 12, and is disposed on the downstream side of head carriages 16 in the conveying direction of the recording medium. Actinic radiation irradiation section 18 irradiates droplets that have been discharged from ink-discharge recording heads 14 and impacted on a recording medium with actinic radiation to cure the droplets.

When actinic radiation is a UV ray, examples of actinic radiation irradiation sections 18 (UV irradiation means) include a fluorescent lamp (a low-pressure mercury lamp, a germicidal lamp), a cold cathode tube, a UV laser, low-, medium- and high-pressure mercury lamps with an operating pressure in a range of several hundred Pa or higher to 1 MPa or lower, a metal halide lamp, and a LED. UV irradiation means with an irradiance of 100 mW/cm² or higher is preferred, in view of curability. Specifically, a high-pressure mercury lamp, a metal halide lamp, and a LED are preferred, and a LED is more preferred, in view of low power consumption and low radiant heat. Specifically, a 254 nm LED (from Nikkiso Co., Ltd.) can be used.

When actinic radiation is an electron beam, examples of actinic radiation irradiation sections 18 (electron beam irradiation means) include a scanning-type, a curtain beam-type, and a broad beam-type electron beam irradiation units. In view of throughput, however, a curtain beam-type electron beam irradiation unit is preferred. Examples of the electron beam irradiation means include "Curetron EBC-200-20-30" (from Nissin High Voltage Co., Ltd.) and "Min-EB" (from AI Technology, Inc.).

Temperature control section 19 is disposed on the lower surface of recording medium 12, and maintains recording medium 12 at a predetermined temperature. Temperature control section 19 can be various heaters, for example.

In the following, an image forming method using line recording-type inkjet recording apparatus 10 will be described. Recording medium 12 is conveyed into between head carriages 16 and temperature control section 19 of inkjet recording apparatus 10. Meanwhile, the temperature of recording medium 12 is adjusted to a predetermined temperature by temperature control section 19. Inks at a high temperature are then discharged from ink-discharge recording heads 14 of head carriages 16 and allowed to attach (impact) on recording medium 12. After that, ink droplets attached on recording medium 12 were irradiated with actinic radiation and cured by actinic radiation irradiation section 18.

During discharge of inks from ink-discharge recording heads 14, the temperature of the inks inside ink-discharge recording heads 14 is preferably set to a temperature 10 to 30°C higher than the gelation temperature of the inks, from a viewpoint of enhancing dischargeability of the inks.

Although depending on the viscosity and the like of an ink, a volume of one droplet discharged from each nozzle of ink-discharge recording heads 14 is preferably 0.5 pL or more and 10 pL or less, more preferably 0.5 pL or more and 4.0 pL or less in order to discharge only in a desired region, further preferably 1.5 pL or more and 4.0 pL or less. Since the ink of the present invention, even applied in such a volume, undergoes sol-gel phase transition, excessive spreading of the ink is prevented, and thus the ink can be discharged only in a desired portion.

Ink droplets attached on a recording medium immediately undergo gelation due to cooling and sol-gel phase transition. This enables pinning of the ink droplets without excessive spreading of the ink droplets. Further, due to immediate gelation of the ink droplets and increased viscosity, oxygen does not readily penetrate into an ink surface attached on the recording medium, and thus curing of the ink surface is less likely to be inhibited by oxygen.

Ink droplets are attached on the recording medium by discharging the ink droplets from ink-discharge recording heads 14. The temperature of the recording medium when the ink droplets are attached is preferably set to a temperature 10°C or more and 20°C or less lower than the gelation temperature of the ink.

In order to suppress coalescence of adjacent ink droplets, irradiation with actinic radiation is performed within 10 seconds, preferably 0.001 second to 5 seconds, more preferably 0.01 second to 2 seconds after the attachment of ink droplets on a recording medium. Irradiation with actinic radiation is preferably performed after inks have been discharged from all of ink-discharge recording heads 14, which are housed in head carriages 16.

When actinic radiation is an electron beam, an accelerating voltage in electron beam irradiation is preferably 30 kV or higher and 250 kV or lower, more preferably 30 kV or higher and 100 kV or lower, in order to perform satisfactory curing. When an accelerating voltage is 100 kV or higher and 250 kV or lower, an irradiation dose of an electron beam is preferably 30 kGy or higher and 100 kGy or lower, more preferably 30 kGy or higher and 60 kGy or lower.

The total ink film thickness after curing is preferably 2 µm or more and 25 µm or less. As used herein, "total ink film thickness" refers to a maximum value of an ink film thickness applied on a recording medium.

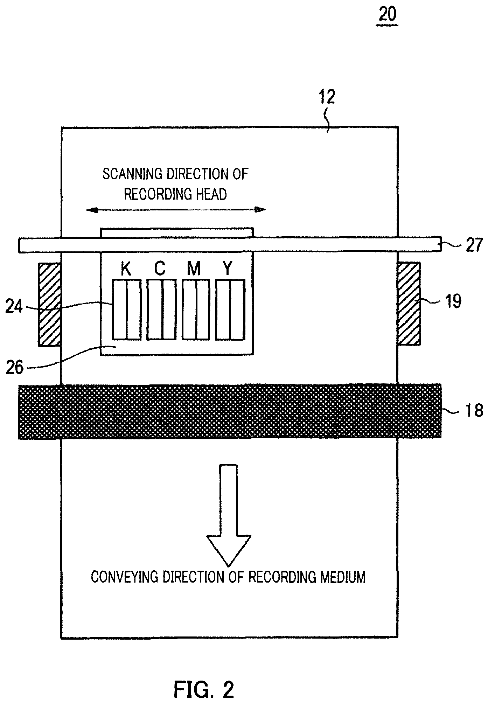

FIG. 2 is a top view illustrating an example of a configuration of the main part of serial recording-type inkjet recording apparatus 20. As illustrated in FIG. 2, inkjet recording apparatus 20 can be configured in substantially the same manner as shown in FIGS. 1A and 1B, except for including, in place of head carriages 16 that are fixed/disposed to cover the entire width of the recording medium, head carriage 26 that has a narrower width than the entire width of the recording medium and houses a plurality of ink-discharge recording heads 24, and guide section 27 for moving head carriage 26 in the width direction of recording medium 12.

Serial recording-type inkjet recording apparatus 20 discharges inks from ink-discharge recording heads 24, which are housed in head carriage 26, while moving head carriage 26 along guide section 27 in the width direction of recording medium 12. Recording medium 12 is sent in the conveying direction after head carriage 26 has completed moving in the width direction of recording medium 12 (in every pass). Except for these operations, images are recorded in substantially the same manner as in the above-mentioned line recording-type inkjet recording apparatus 10.

### Examples

Hereinafter, the present invention will be more specifically described with reference to the examples. The examples, however, shall not be construed as limiting the technical scope of the present invention.

### [Preparation of Cyan Pigment Dispersion]

According to the following procedure, a cyan pigment dispersion was prepared.

To a stainless steel beaker, 9 mass% of EFKA 4130 (from BASF SE) as a pigment dispersant and 71 mass% of Polyethylene Glycol #400 diacrylate (from Shin-Nakamura Chemical Co., Ltd.) as a polyfunctional photocurable compound were fed, and heated/stirred for 1 hour while being heated on a hot plate at 65°C. The resulting mixture was cooled to room temperature, and 20 mass% of Pigment Blue 15:4 (from Dainichiseika Color & Chemicals Mfg. Co., Ltd.) as a pigment was added into the mixture. The resulting solution and 200 g of zirconia beads (diameter 0.5 mm) were together fed to a glass bottle, sealed, and subjected to a dispersion treatment using a paint shaker for 5 hours. The zirconia beads were then removed to yield a cyan pigment dispersion.

### [Preparation of Inks]

In accordance with the ink components shown in the Tables below, the following respective components and the pigment dispersion were mixed, heated to 80°C, and stirred. The resulting solutions were filtered through a Teflon (registered trademark) membrane filter (3 µm, from Advantec Group) under heating to yield ink samples 1 to 32. The unit of the components shown in Tables is mass%.

Ink sample 28 was prepared according to Example 25 of Japanese Patent Application Laid-Open No. 2013-227448.

### [Gelling Agent]

Stearyl stearate (EXCEPARL SS: from Kao Corporation, C17-C18)
Distearyl ketone (KAOWAX T1, from Kao Corporation, C18-C18)
Lauramide (DIAMID Y: from Nippon Kasei Chemical Co., Ltd., C12)
Ethylene glycol distearate (EMALEX EG-di-S: Nihon Emulsion Co., Ltd., C17-C17)

### [Photocurable Compounds]

### (Polyfunctional Photocurable Compounds)

Polyethylene Glycol #400 diacrylate (NK Ester A-400: from Shin-Nakamura Chemical Co., Ltd.)
6EO-modified trimethylolpropane triacrylate (SR 499: from Sartomer)
4EO-modified pentaerythritol tetraacrylate (SR 494: from Sartomer)

### (Monofunctional Photocurable Compound)

Tetrahydrofurfuryl acrylate (V#150: from Osaka Organic Chemical Industry Ltd.)

### [Photoinitiators]

### (a-Hydroxy Ketone Compounds)

ESACURE KIP 150 (from DKSH Management Ltd., molecular weight of 210 or more and 3,000 or less)
IRGACURE 127 (from BASF SE, molecular weight of 340)
IRGACURE 2959 (from BASF SE, molecular weight of 224)
IRGACURE 184 (from BASF SE, molecular weight of 204)

### (Acylphosphine Compounds)

IRGACURE 819 (from BASF SE, molecular weight of 418)
DAROCUR TPO (from BASF SE, molecular weight of 348)

### (a-Amino Ketone Compounds)

IRGACURE 369 (from BASF SE, molecular weight of 366)
IRGACURE 907 (from BASF SE, molecular weight of 279)

### (Benzophenone Compounds)

Omnipol BP (from Rahn AG, molecular weight of 960)
Speedcure BMS (from Lambson Limited, molecular weight of 304)
Speedcure PBZ (from Lambson Limited, molecular weight of 258)

### (Thioxanthone Compounds)

Speedcure 7010 (from Lambson Limited, molecular weight of 1,899)
Speedcure CPTX (from Lambson Limited, molecular weight of 304)
Speedcure ITX (from Lambson Limited, molecular weight of 254)

### [Polymerization Inhibitor]

Irgastab UV 10 (from BASF SE)

### [Surfactant]

KF-352 (from Shin-Etsu Chemical Co., Ltd.)

### [Inkjet Recording Method]

Solid images (100%) were drawn using each ink sample shown in the Tables by disposing two piezo heads with a resolution of 600 dpi in the conveying direction and driving the piezo heads so as to have a recording resolution of 1200 × 1200 dpi and a droplet volume of 4pL.

### (Exposure Method)

While Film-OT P3162 (A4 size, polypropylene sheet, 40 µm) was moved at a rate of 30 m/min, the images were cured using a metal halide lamp (120 W/cm, from GS Yuasa International Ltd.) at a maximum irradiance on an image surface of 280 mW/cm² and 400 mJ/cm² (measured with a 365 nm sensor UVPF-A1 from Iwasaki Electric Co., Ltd.) or using a deep UV-LED lamp (254 nm short-wavelength LED, from Nikkiso Co., Ltd.) at a maximum irradiance on an image surface of 1 W/cm² and 400 mJ/cm² (measured with a 254 nm sensor UVPF-A1 from Iwasaki Electric Co., Ltd.).

### [Evaluation Method]

### (Surface Curability of Inks)

Solid image portions (portions printed at 100%) were left standing under an environment at 25°C and 60%RH for 24 hours. Pencil hardness of the surfaces was then measured according to JIS K 5400, and evaluated in accordance with the following criteria.
A: Pencil hardness of 2H or harder
B: Pencil hardness of B
C: Pencil hardness of F or H
D: pencil hardness of 2B or softer

### (Evaluation of Amount of Migration)

A rear surface (film surface) of a circular solid image-printed article (diameter 10 cm) was brought into contact with a 100 mL mixture (water : ethanol = 5 : 95) and left standing at 60°C for 10 days while the mixture was placed in an airtight metal container to prevent vaporization of the mixture. After that, calculated was the total amount of migration, into the water/ethanol mixture, of a photocurable compound, an initiator, photoinitiator residue after reaction, and/or the like from the printed article, and evaluated in four categories.
A: amount of migration of less than 10 ppb
B: amount of migration of 10 ppb or more and less than 50 ppb
C: amount of migration of 50 ppb or more and less than 100 ppb
D: amount of migration of 100 ppb or more

Evaluation results are shown in the following Tables. In the Tables, asterisk (*) represents "equal to or less than specified molecular weight," and "short-λ" means "short-wavelength."

**[Table 2]**

| Actinic Radiation-curable Inkjet Ink Component | | | Sample No. | 1 | 2 | 3 | 4 | 5 |
|---|---|---|---|---|---|---|---|---|
| | | | Molecular Weight of Photoinitiator | Ex. | Ex. | Ex. | Ex. | Ex. |
| Photocurable Compound | Polyfunctional Photocurable Compound | Polyethylene Glycol #400 diacrylate | - | 46.8 | 47.8 | 29.4 | 29.4 | 29.4 |
| | | 6EO-modified trimethylolpropane triacrylate | - | | | 30.0 | 30.0 | 30.0 |
| | | 4EO-modified pentaerythritol tetraacrylate | - | 30.0 | 30.0 | 20.0 | 20.0 | 20.0 |
| | | PO-modified neopentyl glycol diacrylate | - | | | | | |
| | | 3-Methylpentanediol diacrylate | - | | | | | |
| | Monofunctional Photocurable Compound | V# 150 (Osaka Organic Chemical Industry, Ltd.) | - | | | | | |
| Photoinitiator | α-Hydroxy Ketone Compound | ESACURE KIP150 (DKSH Management Ltd.) | 210 to 3,000 | | | 8.0 | | |
| | | IRGACURE 127 ( BASF SE) | 340 | 8.0 | | | 8.0 | |
| | | IRGACURE 2959 (BASF SE) | 224 | | 8.0 | | | 8.0 |
| | | IRGACURE 184 (BASF SE) | 204* | | | | | |
| | Acylphosphine Compound | IRGACURE 819 (BASF SE) | 418 | | | | | |
| | | DAROCUR TPO (BASF SE) | 348 | | | | | |
| | α-Amino Ketone Compound | IRGACURE 369 (BASF SE) | 366 | | | | | |
| | | IRGACURE 907 (BASF SE) | 279 | | | | | |
| | Benzophenone Compound | Omipol BP (Rahn AG) | 960 | | | | | |
| | | Speedcure BMS (Lambson Limited) | 304 | | | | | |
| | | Speedcure PBZ (Lambson Limited) | 258 | | | | | |
| | Thioxanthone Compound | Speedcure 7010 (Lambson Limited) | 1,899 | | | | | |
| | | Speedcure CPTX (Lambson Limited) | 304 | | | | | |
| | | Speedcure ITX (Lambson Limited) | 254 | | | | | |
| Gelling Agent | | Stearyl stearate (Kao Corporation) | - | | | 2.5 | 2.0 | 2.0 |
| | | Distearyl ketone (Kao Corporation) | - | | | | 0.5 | 0.5 |
| | | Lauramide (Nippon Kasei Chemical Co., Ltd.) | - | 5.0 | | | | |
| | | Ethylene glycol distearate (Nihon Emulsion Co., Ltd.) | - | | 4.0 | | | |
| Photoinitiator Auxiliary Agent | | Speedcure 7040 (Lambson Limited) | - | | | | | |
| Pigment Dispersion | | Pigment dispersion | - | 10.0 | 10.0 | 10.0 | 10.0 | 10.0 |
| Polymerization Inhibitor | | Irgastab UV-10 | - | 0.1 | 0.1 | 0.1 | 0.1 | 0.1 |
| Surfactant | | KF-352 (Shin-Etsu Chemical Co., Ltd.) | - | 0.1 | 0.1 | 0.1 | 0.1 | 0.1 |
| Total Parts by Mass of Inkjet Ink | | | - | 100.0 | 100.0 | 100.0 | 100.0 | 100.0 |
| Evaluation | | Light Source | - | Metal Halide | Metal Halide | Metal Halide | Metal Halide | Metal Halide |
| | | Surface Curability | - | C | C | C | C | C |
| | | Migration | - | C | C | C | C | C |

**[Table 3]**

| Actinic Radiation-curable Inkjet Ink Component | | | Sample No. | 6 | 7 | 8 | 9 | 10 |
|---|---|---|---|---|---|---|---|---|
| | | | Molecular weight of Photoinitiator | Ex. | Ex. | Ex. | Ex. | Ex. |
| Photocurable Compound | Polyfunctional Photocurable Compound | Polyethylene Glycol #400 diacrylate | - | 28.9 | 28.9 | 28.4 | 28.4 | 29.4 |
| | | 6EO-modified trimethylolpropane triacrylate | - | 30.0 | 30.0 | 30.0 | 30.0 | 30.0 |
| | | 4EO-modified pentaerythritol tetraacrylate | - | 20.0 | 20.0 | 20.0 | 20.0 | 20.0 |
| | | PO-modified neopentyl glycol diacrylate | - | | | | | |
| | | 3-Methylpentanediol diacrylate | - | | | | | |
| | Monofunctional Photocurable Compound | V#150 (Osaka Organic Chemical Industry, Ltd.) | - | | | | | |
| Photoinitiator | α-Hydroxy Ketone Compound | ESACURE KIP150 (DKSH Management Ltd.) | 210 to 3,000 | | | | | |
| | | IRGACURE 127 ( BASF SE) | 340 | 8.0 | 8.0 | 2.0 | 2.0 | 2.0 |
| | | IRGACURE 2959 (BASF SE) | 224 | | | | | |
| | | IRGACURE 184 (BASF SE) | 204* | | | | | |
| | Acylphosphine Compound | IRGACURE 819 (BASF SE) | 418 | | | | | |
| | | DAROCUR TPO (BASF SE) | 348 | 0.5 | | 7.0 | | 6.0 |
| | α-Amino Ketone Compound | IRGACURE 369 (BASF SE) | 366 | | | | | |
| | | IRGACURE 907 (BASF SE) | 279 | | 0.5 | | 7.0 | |
| | Benzophenone Compound | Omipol BP (Rahn AG) | 960 | | | | | |
| | | Speedcure BMS (Lambson Limited) | 304 | | | | | |
| | | Speedcure PBZ (Lambson Limited) | 258 | | | | | |
| | Thioxanthone Compound | Speedcure 7010 (Lambson Limited) | 1,899 | | | | | |
| | | Speedcure CPTX (Lambson Limited) | 304 | | | | | |
| | | Speedcure ITX (Lambson Limited) | 254 | | | | | |
| Gelling Agent | | Stearyl stearate (Kao Corporation) | - | 2.0 | 2.0 | 2.0 | 2.0 | 2.0 |
| | | Distearyl ketone (Kao Corporation) | - | 0.5 | 0.5 | 0.5 | 0.5 | 0.5 |
| | | Lauramide (Nippon Kasei Chemical Co., Ltd.) | - | | | | | |
| | | Ethylene glycol distearate (Nihon Emulsion Co., Ltd.) | - | | | | | |
| Photoinitiator Auxiliary Agent | | Speedcure 7040 (Lambson Limited) | - | | | | | |
| Pigment Dispersion | | Pigment dispersion | - | 10.0 | 10.0 | 10.0 | 10.0 | 10.0 |
| Polymerization Inhibitor | | Irgastab UV-10 | - | 0.1 | 0.1 | 0.1 | 0.1 | 0.1 |
| Surfactant | | KF-352 (Shin-Etsu Chemical Co., Ltd.) | - | 0.1 | 0.1 | 0.1 | 0.1 | 0.1 |
| Total Parts by Mass of Inkjet Ink | | | - | 100.0 | 100.0 | 100.0 | 100.0 | 100.0 |
| Evaluation | | Light Source | - | Metal Halide | Metal Halide | Metal Halide | Metal Halide | Metal Halide |
| | | Surface Curability | - | C | C | B | B | B |
| | | Migration | - | C | C | C | C | B |

**[Table 4]**

| Actinic Radiation-curable Inkjet Ink Component | | | Sample No. | 11 | 12 | 13 | 14 | 15 |
|---|---|---|---|---|---|---|---|---|
| | | | Molecular weight of Photo initiator | Ex. | Ex. | Ex. | Ex. | Ex. |
| Photocurable Compound | Polyfunctional Photocurable Compound | Polyethylene Glycol #400 diacrylate | - | 29.4 | 27.4 | 26.4 | 25.4 | 25.4 |
| | | 6EO-modified trimethylolpropane triacrylate | - | 30.0 | 30.0 | 30.0 | 30.0 | 30.0 |
| | | 4EO-modified pentaerythritol tetraacrylate | - | 20.0 | 20.0 | 20.0 | 20.0 | 20.0 |
| | | PO-modified neopentyl glycol diacrylate | - | | | | | |
| | | 3-Methylpentanediol diacrylate | - | | | | | |
| | Monofunctional Photocurable Compound | V#150 (Osaka Organic Chemical Industry, Ltd.) | - | | | | | |
| Photoinitiator | α-Hydroxy Ketone Compound | ESACURE KIP150 (DKSH Management Ltd.) | 210 to 3,000 | | | | | |
| | | IRGACURE 127 ( BASF SE) | 340 | 2.0 | 8.0 | 10.0 | 8.0 | 8.0 |
| | | IRGACURE 2959 (BASF SE) | 224 | | | | | |
| | | IRGACURE 184 (BASF SE) | 204* | | | | | |
| | Acylphosphine Compound | IRGACURE 819 (BASF SE) | 418 | | | | | |
| | | DAROCUR TPO (BASF SE) | 348 | | 2.0 | | 2,0 | |
| | α-Amino Ketone Compound | IRGACURE 369 (BASF SE) | 366 | | | | | |
| | | IRGACURE 907 (BASF SE) | 279 | 6.0 | | 1.0 | | 2.0 |
| | Benzophenone Compound | Omipol BP (Rahn AG) | 960 | | | | | |
| | | Speedcure BMS (Lambson Limited) | 304 | | | | | |
| | | Speedcure PBZ (Lambson Limited) | 258 | | | | 2.0 | |
| | Thioxanthone Compound | Speedcure 7010 (Lambson Limited) | 1,899 | | | | | |
| | | Speedcure CPTX (Lambson Limited) | 304 | | | | | |
| | | Speedcure ITX (Lambson Limited) | 254 | | | | | 2.0 |
| Gelling Agent | | Stearyl stearate (Kao Corporation) | - | 2.0 | 2.0 | 2.0 | 2.0 | 2.0 |
| | | Distearyl ketone (Kao Corporation) | - | 0.5 | 0.5 | 0.5 | 0.5 | 0.5 |
| | | Lauramide (Nippon Kasei Chemical Co., Ltd.) | - | | | | | |
| | | Ethylene glycol distearate (Nihon Emulsion Co., Ltd.) | - | | | | | |
| Photoinitiator Auxiliary Agent | | Speedcure 7040 (Lambson Limited) | - | | | | | |
| Pigment Dispersion | | Pigment dispersion | - | 10.0 | 10.0 | 10.0 | 10.0 | 10.0 |
| Polymerization Inhibitor | | Irgastab UV-10 | - | 0.1 | 0.1 | 0.1 | 0.1 | 0.1 |
| Surfactant | | KF-352 (Shin-Etsu Chemical Co., Ltd.) | - | 0.1 | 0.1 | 0.1 | 0.1 | 0.1 |
| Total Parts bv Mass of Inkjet Ink | | | - | 100.0 | 100,0 | 100.0 | 100.0 | 100.0 |
| Evaluation | | Light Source | - | Metal Halide | Metal Halide | Metal Halide | Metal Halide | Metal Halide |
| | | Surface Curability | - | B | B | B | A | A |
| | | Migration | - | B | B | B | B | B |

**[Table 5]**

| Actinic Radiation-curable Inkjet Ink Component | | | Sample No. | 16 | 17 | 18 | 19 | 20 |
|---|---|---|---|---|---|---|---|---|
| | | | Molecular weight of Photo initiator | Ex. | Ex. | Ex. | Ex. | Ex. |
| Photocurable Compound | Polyfunctional Photocurable Compound | Polyethylene Glycol #400 diacrylate | - | 25.4 | 25.4 | 25.4 | 25.4 | 25.4 |
| | | 6EO-modified trimethylolpropane triacrylate | - | 30.0 | 30.0 | 30.0 | 30.0 | 30.0 |
| | | 4EO-modified pentaerythritol tetraacrylate | - | 20.0 | 20.0 | 20.0 | 20.0 | 20.0 |
| | | PO-modified neopentyl glycol diacrylate | - | | | | | |
| | | 3-Methylpentanediol diacrylate | - | | | | | |
| | Monofunctional Photocurable Compound | V#150 (Osaka Organic Chemical Industry, Ltd.) | - | | | | | |
| Photoinitiator | α-Hydroxy Ketone Compound | ESACURE KIP150 (DKSH Management Ltd.) | 210 to 3,000 | | | | | |
| | | IRGACURE 127 ( BASF SE) | 340 | 8.0 | 8.0 | 8.0 | 8.0 | 8.0 |
| | | IRGACURE 2959 (BASF SE) | 224 | | | | | |
| | | IRGACURE 184 (BASF SE) | 204* | | | | | |
| | Acylphosphine Compound | IRGACURE 819 (BASF SE) | 418 | | | | | 2.0 |
| | | DAROCUR TPO (BASF SE) | 348 | 2.0 | | 2.0 | | |
| | α-Amino Ketone Compound | IRGACURE 369 (BASF SE) | 366 | | | | | |
| | | IRGACURE 907 (BASF SE) | 279 | | 2.0 | | 2.0 | |
| | Benzophenone Compound | Omipol BP (Rahn AG) | 960 | | | 2.0 | | 2.0 |
| | | Speedcure BMS (Lambson Limited) | 304 | 2.0 | | | | |
| | | Speedcure PBZ (Lambson Limited) | 258 | | | | | |
| | Thioxanthone Compound | Speedcure 7010 (Lambson Limited) | 1,899 | | | | 2.0 | |
| | | Speedcure CPTX (Lambson Limited) | 304 | | 2.0 | | | |
| | | Speedcure ITX (Lambson Limited) | 254 | | | | | |
| Gelling Agent | | Stearyl stearate (Kao Corporation) | - | 2.0 | 2.0 | 2.0 | 2.0 | 2.0 |
| | | Distearyl ketone (Kao Corporation) | - | 0.5 | 0.5 | 0.5 | 0.5 | 0.5 |
| | | Lauramide (Nippon Kasei Chemical Co., Ltd.) | - | | | | | |
| | | Ethylene glycol distearate (Nihon Emulsion Co., Ltd.) | - | | | | | |
| Photoinitiator Auxiliary Agent | | Speedcure 7040 (Lambson Limited) | - | | | | | |
| Pigment Dispersion | | Pigment dispersion | - | 10.0 | 10.0 | 10.0 | 10.0 | 10.0 |
| Polymerization Inhibitor | | Irgastab UV-10 | - | 0.1 | 0.1 | 0.1 | 0.1 | 0.1 |
| Surfactant | | KF-352 (Shin-Etsu Chemical Co., Ltd.) | - | 0.1 | 0.1 | 0.1 | 0.1 | 0.1 |
| Total Parts by Mass of Inkjet Ink | | | - | 100.0 | 100.0 | 100.0 | 100.0 | 100.0 |
| Evaluation | | Light Source | - | Metal Halide | Metal Halide | Metal Halide | Metal Halide | Metal Halide |
| | | Surface Curability | - | A | A | A | A | A |
| | | Migration | - | A | A | A | A | A |

**[Table 6]**

| Actinic Radiation-curable Inkjet Ink Component | | | Sample No. | 21 | 22 | 23 | 24 | 25 |
|---|---|---|---|---|---|---|---|---|
| | | | Molecular weight of Photoinitiator | Ex. | Ex. | Ex. | Comp. Ex. | Comp. Ex |
| Photocurable Compound | Polyfunctional Photocurable Compound | Polyethylene Glycol #400 diacrylate | - | 25.4 | 27.4 | 27.4 | 29.4 | 27.4 |
| | | 6EO-modified trimethylolpropane triacrylate | - | 30.0 | 30.0 | 30.0 | 30.0 | 30.0 |
| | | 4EO-modified pentaerythritol tetraacrylate | - | 20.0 | 20.0 | 20.0 | | 20.0 |
| | | PO-modified neopentyl glycol diacrylate | - | | | | | |
| | | 3-Methylpentanediol diacrylate | - | | | | | |
| | Monofunctional Photocurable Compound | V#150 (Osaka Organic Chemical Industry, Ltd.) | - | | | | 20.0 | |
| Photoinitiator | α-Hydroxy Ketone Compound | ESACURE KIP150 (DKSH Management Ltd.) | 210 to 3,000 | | | | | |
| | | IRGACURE 127 (BASF SE) | 340 | 8.0 | 2.0 | 2.0 | 8.0 | |
| | | IRGACURE 2959 (BASF SE) | 224 | | | | | |
| | | IRGACURE 184 (BASF SE) | 204* | | | | | |
| | Acylphosphine Compound | IRGACURE 819 (BASF SE) | 418 | | 6.0 | | | 8.0 |
| | | DAROCUR TPO (BASF SE) | 348 | | | | | |
| | α-Amino Ketone Compound | IRGACURE 369 (BASF SE) | 366 | 2.0 | | 6.0 | | |
| | | IRGACURE 907 (BASF SE) | 279 | | | | | |
| | Benzophenone Compound | Omipol BP (Rahn AG) | 960 | | 2.0 | | | 2.0 |
| | | Speedcure BMS (Lambson Limited) | 304 | | | | | |
| | | Speedcure PBZ (Lambson Limited) | 258 | | | | | |
| | Thioxanthone Compound | Speedcure 7010 (Lambson Limited) | 1,899 | 2.0 | | 2.0 | | |
| | | Speedcure CPTX (Lambson Limited) | 304 | | | | | |
| | | Speedcure ITX (Lambson Limited) | 254 | | | | | |
| Gelling Agent | | Stearyl stearate (Kao Corporation) | - | 2.0 | 2.0 | 2.0 | 2.0 | 2.0 |
| | | Distearyl ketone (Kao Corporation) | - | 0.5 | 0.5 | 0.5 | 0.5 | 0.5 |
| | | Lauramide (Nippon Kasei Chemical Co., Ltd.) | - | | | | | |
| | | Ethylene glycol distearate (Nihon Emulsion Co., Ltd.) | - | | | | | |
| Photoinitiator Auxiliary Agent | | Speedcure 7040 (Lambson Limited) | - | | | | | |
| Pigment Dispersion | | Pigment dispersion | - | 10.0 | 10.0 | 10.0 | 10.0 | 10.0 |
| Polymerization Inhibitor | | Irgastab UV-10 | - | 0.1 | 0.1 | 0.1 | 0.1 | 0.1 |
| Surfactant | | KF-352 (Shin-Etsu Chemical Co., Ltd.) | - | 0.1 | 0.1 | 0.1 | 0.1 | 0.1 |
| Total Parts by Mass of Inkjet Ink | | | - | 100.0 | 100.0 | 100.0 | 100.0 | 100.0 |
| Evaluation | | Light Source | - | Metal Halide | Metal Halide | Metal Halide | Metal Halide | Metal Halide |
| | | Surface Curability | - | A | A | A | C | C |
| | | Migration | - | A | A | A | D | D |

**[Table 7]**

| Actinic Radiation-curable Inkjet Ink Component | | | Sample No. | 26 | 27 | 28 | 29 | 30 | 31 | 32 |
|---|---|---|---|---|---|---|---|---|---|---|
| | | | Molecular weight of Photoinitiator | Comp. Ex. | Comp. Ex. | Comp. Ex. | Ex. | Ex. | Ex. | Ex. |
| Photocurable Compound | Polyfunctional Photocurable Compound | Polyethylene Glycol #400 diacrylate | - | 29.4 | 27.9 | | 29.4 | 27.4 | 25.4 | 25.4 |
| | | 6EO-modified trimethylolpropane triacrylate | - | 30.0 | 30.0 | | 30.0 | 30.0 | 30.0 | 30.0 |
| | | 4EO-modified pentaerythritol tetraacrylate | - | 20.0 | 20.0 | | 20.0 | 20.0 | 20.0 | 20.0 |
| | | PO-modified neopentyl glycol diacrylate | - | | | 60.0 | | | | |
| | | 3-Methylpentanediol diacrylate | - | | | 26.8 | | | | |
| | Monofunctional Photocurable Compound | V#150 (Osaka Organic Chemical Industry, Ltd.) | - | | | | | | | |
| Photoinitiator | α-Hydroxy Ketone Compound | ESACURE KIP150 (DKSH Management Ltd.) | 210 to 3,000 | | | 3.0 | | | | |
| | | IRGACURE 127 ( BASF SE) | 340 | | 8.0 | | 8.0 | 8.0 | 8.0 | 8.0 |
| | | IRGACURE 2959 (BASF SE) | 224 | | | | | | | |
| | | IRGACURE 184 (BASF SE) | 204* | 8.0 | | | | | | |
| | Acylphosphine Compound | IRGACURE 819 (BASF SE) | 418 | | 2.0 | | | | | |
| | | DAROCUR TPO (BASF SE) | 348 | | | | | 2.0 | 2.0 | 2.0 |
| | α-Amino Ketone Compound | IRGACURE 369 (BASF SE) | 366 | | | | | | | |
| | | IRGACURE 907 (BASF SE) | 279 | | | | | | | |
| | Benzophenone Compound | Omipol BP (Rahn AG) | 960 | | 2.0 | | | | | |
| | | Speedcure BMS (Lambson Limited) | 304 | | | | | | 2.0 | 2.0 |
| | | Speedcure PBZ (Lambson Limited) | 258 | | | | | | | |
| | Thioxanthone Compound | Speedcure 7010 (Lambson Limited) | 1,899 | | | 1.0 | | | | |
| | | Speedcure CPTX (Lambson Limited) | 304 | | | | | | | |
| | | Speedcure ITX (Lambson Limited) | 254 | | | | | | | |
| Gelling Agent | | Stearyl stearate (Kao Corporation) | - | 2.0 | | | 2.0 | 2.0 | 2.0 | 2.0 |
| | | Distearyl ketone (Kao Corporation) | - | 0.5 | | | 0.5 | 0.5 | 0.5 | 0.5 |
| | | Lauramide (Nippon Kasei Chemical Co., Ltd.) | - | | | | | | | |
| | | Ethylene glycol distearate (Nihon Emulsion Co., Ltd.) | - | | | | | | | |
| Photoinitiator Auxiliary Agent | | Speedcure 7040 (Lambson Limited) | - | | | 1.0 | | | | |
| Pigment Dispersion | | Pigment dispersion | - | 10.0 | 10.0 | 8.0 | 10.0 | 10.0 | 10.0 | 10.0 |
| Polymerization Inhibitor | | Irgastab UV-10 | - | 0.1 | 0.1 | 0.1 | 0.1 | 0.1 | 0.1 | 0.1 |
| Surfactant | | KF-352 (Shin-Etsu Chemical Co., Ltd.) | - | 0.1 | 0.1 | 0.1 | 0.1 | 0.1 | 0.1 | 0.1 |
| Total Parts by Mass of Inkjet Ink | | | - | 100.0 | 100.0 | 100.0 | 100.0 | 100.0 | 100.0 | 100.0 |
| Evaluation | | Light Source | - | Metal Halide | Metal Halide | Metal Halide | Short -λ LED | Short -λ LED | Short -λ LED | Short -λ LED |
| | | Surface Curability | - | C | C | C | B | A | A | A |
| | | Migration | - | D | D | D | C | B | A | A |

This application is entitled to and claims the benefit of Japanese Patent Application No. 2015-065249, filed on March 26, 2015, the disclosure of which including the specification and drawings is incorporated herein by reference in its entirety.

### Industrial Applicability

The actinic radiation-curable inkjet ink of the present invention can further reduce the amount of migration relative to PTL 1 and even satisfy a strict regulation, such as the Swiss Ordinance, which is a European regulation, and thus is suitable for an inkjet recording method on recording media for food packaging.

### Reference Signs List

10, 20 Inkjet recording apparatus
12 Recording medium
14, 24 Ink-discharge recording head
16, 26 Head carriage
18 Actinic radiation irradiation section
19 Temperature control section
27 Guide section

## Claims

1. An actinic radiation-curable inkjet ink comprising at least one photocurable compound and at least one photoinitiator, wherein:
the at least one photocurable compound substantially consists of a polyfunctional photocurable compound;
the at least one photoinitiator includes an α-hydroxy ketone compound;
a molecular weight of the α-hydroxy ketone compound is 210 or more and 3,000 or less;
the actinic radiation-curable inkjet ink further comprises a gelling agent and undergoes sol-gel phase transition; and
the gelling agent is a compound represented by the general formula (G1) or (G2):
R¹-CO-R² (G1)
R³-COO-R⁴ (G2)
in which R¹ to R⁴ independently designates an alkyl group containing a C₁₂₋₂₆ linear portion and optionally containing a branched portion.

2. The actinic radiation-curable inkjet ink according to claim 1, wherein the at least one photoinitiator includes at least one of an acylphosphine compound and an α-amino ketone compound.

3. The actinic radiation-curable inkjet ink according to claim 2, wherein a mass ratio below is satisfied:
X : (Y + Z) = 10 : 1 to 1 : 3
wherein:
X is a content of the α-hydroxy ketone compound based on a total mass of the ink;
Y is a content of the acylphosphine compound based on the total mass of the ink; and
Z is a content of the α-amino ketone compound based on the total mass of the ink.

4. The actinic radiation-curable inkjet ink according to any one of claims 1 to 3, wherein the at least one photoinitiator includes at least one of a benzophenone compound with a molecular weight of 300 or more and 3, 000 or less, and a thioxanthone compound with a molecular weight of 300 or more and 3, 000 or less.

5. The actinic radiation-curable inkjet ink according to claim 3, wherein the acylphosphine compound is Irg 819 (bis(2,4,6-trimethylbenzoyl)phenylphosphine oxide), and the α-amino ketone compound is Irg 369 (2-benzyl-2-dimethylamino-1-(4-morpholinophenyl)butanone-1) .

6. An inkjet recording method, wherein recording is performed using the actinic radiation-curable inkjet ink according to any one of claims 1 to 5.

7. The inkjet recording method according to claim 6, comprising irradiating the actinic radiation-curable inkjet ink with actinic radiation from a light source and curing, wherein the light source is a LED with a peak emission wavelength of 200 nm or longer and less than 350 nm.

## Patentansprüche

1. Mittels aktinischer Strahlung härtbare Tintenstrahltinte, umfassend zumindest eine photohärtbare Verbindung und zumindest einen Photoinitiator, wobei:
die zumindest eine photohärtbare Verbindung im Wesentlichen aus einer polyfunktionellen photohärtbaren Verbindung besteht;
der zumindest eine Photoinitiator eine α-Hydroxyketon-Verbindung umfasst;
das Molekulargewicht der α-Hydroxyketon-Verbindung 210 oder mehr und 3, 000 oder weniger beträgt;
die mittels aktinischer Strahlung härtbare Tintenstrahltinte weiterhin ein Geliermittel umfasst und eine Sol-Gel-Phasenumwandlung vollzieht; und
das Geliermittel eine durch die allgemeine Formel (G1) oder (G2) dargestellte Verbindung ist:
R¹-CO-R² (G1)
R³-COO-R⁴ (G2)
in welcher R¹ bis R⁴ unabhängig voneinander für eine Alkylgruppe stehen, die einen linearen C₁₂₋₂₆-Abschnitt enthält und gegebenenfalls einen verzweigten Abschnitt enthält.

2. Mittels aktinischer Strahlung härtbare Tintenstrahltinte gemäß Anspruch 1, wobei der zumindest eine Photoinitiator zumindest eine Verbindung ausgewählt aus einer Acylphosphin-Verbindung und einer α-Aminoketon-Verbindung umfasst.

3. Mittels aktinischer Strahlung härtbare Tintenstrahltinte gemäß Anspruch 2, wobei das nachfolgende Massenverhältnis erfüllt ist:
X : (Y + Z) = 10 : 1 bis 1 : 3
worin:
X den Gehalt der α-Hydroxyketon-Verbindung in Bezug auf die Gesamtmasse der Tinte darstellt;
Y den Gehalt der Acylphosphin-Verbindung in Bezug auf die Gesamtmasse der Tinte darstellt; und
Z den Gehalt der α-Aminoketon-Verbindung in Bezug auf die Gesamtmasse der Tinte darstellt.

4. Mittels aktinischer Strahlung härtbare Tintenstrahltinte gemäß einem der Ansprüche 1 bis 3, wobei der zumindest eine Photoinitiator zumindest eine Verbindung ausgewählt aus einer Benzophenon-Verbindung mit einem Molekulargewicht von 300 oder mehr und 3, 000 oder weniger, und einer Thioxanthon-Verbindung mit einem Molekulargewicht von 300 oder mehr und 3, 000 oder weniger umfasst.

5. Mittels aktinischer Strahlung härtbare Tintenstrahltinte gemäß Anspruch 3, wobei es sich bei der Acylphosphin-Verbindung um Irg 819 (Bis(2,4,6-Trimethylbenzoyl)phenylphosphinoxid) handelt, und es sich bei der α-Aminoketon-Verbindung um Irg 369 (2-Benzyl-2-dimethylamino-1-(4-morpholinophenyl)butanon-1) handelt.

6. Tintenstrahlaufzeichnungsverfahren, wobei die Aufzeichnung unter Verwendung der mittels aktinischer Strahlung härtbaren Tintenstrahltinte gemäß einem der Ansprüche 1 bis 5 erfolgt.

7. Tintenstrahlaufzeichnungsverfahren gemäß Anspruch 6, umfassend das Bestrahlen der mittels aktinischer Strahlung härtbaren Tintenstrahltinte mit aktinischer Strahlung aus einer Lichtquelle sowie Härten, wobei es sich bei der Lichtquelle um eine LED mit einer Peakemissionswellenlänge von 200 nm oder mehr und weniger als 350 nm handelt.

## Revendications

1. Encre pour imprimante à jet d'encre durcissable par du rayonnement actinique, comprenant au moins un composé photodurcissable et au moins un photoamorceur, dans laquelle :
le au moins un composé photodurcissable consiste, en substance, en un composé photodurcissable polyfonctionnel, le au moins un photoamorceur comprend une α-hydroxy cétone ;
un poids moléculaire de l'α-hydroxy cétone est supérieur ou égal à 210 et inférieur ou égal à 3 000 ;
l'encre pour imprimante à jet d'encre durcissable par du rayonnement actinique comprend, en outre, un agent gélifiant et subit une transition de phase sol-gel et
l'agent gélifiant est un composé représenté par la formule générale (G1) ou (G2) :
R¹-CO-R² (G1)
R³-COO-R⁴ (G2)
dans lesquelles R¹ à R⁴ désignent indépendamment un groupe alcoyle ayant une partie linéaire en C₁₂ à C₂₆ et ayant, éventuellement, une partie ramifiée.

2. Encre pour imprimante à jet d'encre durcissable par un rayonnement actinique suivant la revendication 1, dans laquelle le au moins un photoamorceur comprend, au moins, une acylphosphine et une α-amino cétone.

3. Encre pour imprimante à jet d'encre durcissable par un rayonnement actinique suivant la revendication 2, dans laquelle un rapport en masse ci-dessous est satisfait :
X : (Y + Z) = 10 : 1 à 1 : 3
dans laquelle :
X est une teneur en α-hydroxy cétone par rapport à la masse totale de l'encre ;
Y est une teneur en acylphosphine par rapport à la masse totale de l'encre et
Z est une teneur en α-amino cétone par rapport à la masse totale de l'encre.

4. Encre pour imprimante à jet d'encre durcissable par un rayonnement actinique suivant l'une quelconque des revendications 1 à 3, dans laquelle le au moins un photoamorceur comprend, au moins, l'une d'une benzophénone d'un poids moléculaire supérieur ou égal à 300 et inférieur ou égal à 3 000 et d'une thioxanthone d'un poids moléculaire supérieur ou égal à 300 et inférieur ou égal à 3 000.

5. Encre pour imprimante à jet d'encre durcissable par un rayonnement actinique suivant la revendication 3, dans laquelle l'acylphosphine est Irg 819 (oxyde de (bis(2,4,6-triméthylbenzoylphénylphosphine)) et l'α-amino cétone est Irg 369 (2-benzyl-2-diméthylamino-1-(4-morpholinophényl)butanone-1) .

6. Procédé d'enregistrement par jet d'encre, dans lequel on effectue l'enregistrement en utilisant l'encre pour imprimante à jet d'encre durcissable par du rayonnement actinique suivant l'une quelconque des revendications 1 à 5.

7. Procédé d'enregistrement par jet d'encre suivant la revendication 6, comprenant exposer l'encre pour imprimante par jet d'encre durcissable par du rayonnement actinique à du rayonnement actinique d'une source lumineuse et durcir, la source lumineuse étant une DEL ayant une longueur d'onde d'émission de crête supérieure ou égale à 200 nm et inférieure à 350 nm.
